# EUROPEAN PATENT APPLICATION

(11) **EP 4 607 629 A1**
(43) Date of publication of application: **27.08.2025**
(21) Application number: 23878946.5
(22) Date of filing: 28.09.2023
(51) Int. Cl.: H01M 10/04, H01M 6/00, B65H 19/30

(54) **CORE ROD FEEDING DEVICE AND BATTERY WINDING MACHINE**

(30) Priority: 21.10.2022 CN 202211293695
(71) Applicant: Wuxi Lead Intelligent Equipment Co., Ltd., Wuxi, Jiangsu 214028 (CN)
(72) Inventor: CAO, Xuming, Wuxi, Jiangsu 214028 (CN)
(74) Representative: Rau, Schneck & Hübner Patentanwälte Rechtsanwälte PartGmbB
(86) International application number: PCT/CN2023/122650
(87) International publication number: WO 2024/082954

(57) **Abstract**

Disclosed is a mandrel feeding device and a battery winder. The mandrel feeding device has a dispensing station, an adjusting station and an adhesive application station. The mandrel feeding device includes: a transferring apparatus capable of moving to the dispensing station, the adjusting station, and the adhesive application station; a dispensing apparatus provided at the dispensing station and configured for storing mandrels and sequentially outputting mandrels one by one, wherein the transferring apparatus, when moved to the dispensing station, is capable of receiving the mandrels output by the dispensing apparatus; an adjusting apparatus provided at the adjusting station and configured for causing a mandrel, which is transferred to the adjusting station by the transferring apparatus, to rotate, until the positioning portion of the mandrel is located at the preset position; an adhesive application apparatus provided at the adhesive application station and configured for applying a double-sided adhesive layer onto a mandrel transferred to the adhesive application station by the transferring apparatus; a feeding apparatus configured for gripping a mandrel on the transferring apparatus and transferring gripped mandrel to a winding mechanism.

## Description

### CROSS-REFERENCE TO RELATED APPLICATIONS

The present disclosure claims priority to a Chinese patent application No. 202211293695.8 filed with the CNIPA on October 21, 2022 and entitled "Mandrel Feeding Device and Battery Winder", which is hereby incorporated by reference in its entirety.

### TECHNICAL FIELD

The present disclosure relates to the technical field of battery manufacturing devices, and particularly to a mandrel feeding device and a battery winder.

### BACKGROUND

The cell is a crucial component in batteries. For example, cylindrical cells are typically produced using a winding process. During winding, it is first necessary to feed the mandrels one by one to a winding station, where a notch at an end of the mandrel is positioned to match with a winding needle at the winding station, allowing the winding needle to cause the mandrel to rotate. As the winding needle causes the mandrel to rotate, a material strip is wound around the mandrel so as to form the cell on the mandrel.

In a process of feeding the mandrel, it is necessary to adjust the position of the notch on the mandrel to ensure accurate alignment between the mandrel and the winding needle. Additionally, it is essential to apply a double-sided adhesive tape onto the mandrel, such that during the subsequent winding, this tape can be used to adhere the leading edge of the material being wound (e.g., a separating diaphragm). However, for a mandrel feeding device in the related art, manual intervention is required to adjust the position of the notch on the mandrel and to apply the double-sided adhesive tape onto the mandrel, which results in a lower level of automation and a significantly reduced efficiency of feeding the mandrel.

### SUMMARY

The present disclosure is directed to alleviating or solving, at least in part, at least one of the above mentioned problems.

In a first aspect of the present disclosure, the present disclosure proposes a mandrel feeding device, which has a dispensing station, an adjusting station and an adhesive application station. The mandrel feeding device includes: a transferring apparatus capable of moving to the dispensing station, the adjusting station, and the adhesive application station; a dispensing apparatus provided at the dispensing station and configured for storing mandrels and sequentially outputting mandrels one by one, wherein the transferring apparatus, when moved to the dispensing station, is capable of receiving the mandrels output by the dispensing apparatus; an adjusting apparatus provided at the adjusting station and configured for causing a mandrel, which is transferred to the adjusting station by the transferring apparatus, to rotate; an adhesive application apparatus provided at the adhesive application station and configured for applying a double-sided adhesive layer onto a mandrel transferred to the adhesive application station by the transferring apparatus; a feeding apparatus configured for gripping a mandrel on the transferring apparatus and transferring gripped mandrel to a winding mechanism.

Optionally, the transferring apparatus includes a transferring mechanism, which includes: a mounting seat and a supporting board, the supporting board being mounted on the mounting seat and configured for bearing a mandrel; a holding structure including two holding blocks, which are provided on the mounting seat, are located on two sides of the supporting board in a first direction, and are capable of moving close to or away from each other in a controlled way so as to hold or release the mandrels borne on the supporting board.

Optionally, the holding structure further includes: a first elastic member provided on the mounting seat, each of the two holding blocks being correspondingly provided with the first elastic member, and the first elastic members each abutting against corresponding holding block so as to provide a pre-tightening force that gives the two holding blocks a tendency to move close to each other; and a wedge block provided on the mounting seat and located between the two holding blocks, each of the two holding blocks being provided with an abutting portion that abuts against the wedge block, and the wedge block being capable of moving in a controlled way between two abutting portions so as to drive the two holding blocks to move close to or away from each other.

In one of embodiments, the transferring apparatus includes two transferring mechanisms, one of which is capable of moving between the dispensing station and the adjusting station, so as to receive the mandrels output by the dispensing apparatus at the dispensing station, and to transfer the mandrels to the adjusting apparatus at the adjusting station; wherein the other one of the transferring mechanisms is capable of moving between the adjusting station and the adhesive application station, so as to receive the mandrels transferred by the adjusting apparatus at the adjusting station, to enable the adhesive application apparatus to apply adhesive to the mandrels at the adhesive application station, and to transfer the mandrels to the feeding apparatus.

Optionally, the dispensing apparatus includes: a material box provided with a containment cavity for containing a plurality of mandrels, and an opening at a bottom of the containment cavity; and a dispensing wheel rotatably provided below the material box, the dispensing wheel being opened with a plurality of accommodation grooves on a peripheral surface thereof, and the plurality of accommodation grooves being arranged at intervals in a circumferential direction of the dispensing wheel, wherein, each of the accommodation grooves is configured for accommodating a mandrel when rotating to the opening along with the dispensing wheel, and transferring the mandrel onto the transferring apparatus when rotating to an outlet position along with the dispensing wheel.

In one of embodiments, the dispensing apparatus further includes: a guiding member arranged around the dispensing wheel and forming a conveying channel with the peripheral surface of the dispensing wheel, the guiding member being provided with an inlet end at the opening and an outlet end at the outlet position, during rotating of the dispensing wheel, the mandrels accommodated in the accommodation grooves enter the conveying channel from the inlet end and are conveyed to the transferring apparatus through the outlet end.

Optionally, the dispensing apparatus further includes: a guiding matching member provided at the outlet position and forming a dispensing port with the outlet end of the guiding member, the mandrels accommodated in the accommodation grooves, when rotating to the dispensing port along with the dispensing wheel, falling onto the transferring apparatus from the dispensing port under their own gravity.

Optionally, the adjusting apparatus includes an adjusting mechanism, which includes: a first supporting seat, a first rotation abutting shaft and a second rotation abutting shaft, the first rotation abutting shaft and the second rotation abutting shaft being rotatably connected to the first supporting seat about their own axes respectively, and the axes of the first rotation abutting shaft and the second rotation abutting shaft being collinear; the first rotation abutting shaft and the second rotation abutting shaft being arranged at intervals and being capable of moving close to or away from each other in a controlled way; the mandrels transferred to the adjusting station by the transferring apparatus being capable of moving to between the first rotation abutting shaft and the second rotation abutting shaft in a controlled way; and a detector configured for detecting a position of a positioning portion on a mandrel clamped between the first rotation abutting shaft and the second rotation abutting shaft.

Optionally, the adjusting mechanism further includes a guiding shaft, which is connected to an end of the first rotation abutting shaft facing towards the second rotation abutting shaft, or connected to an end of the second rotation abutting shaft facing towards the first rotation abutting shaft; as the first rotation abutting shaft and the second rotation abutting shaft move close to or away from each other, the guiding shaft is inserted into or withdrawn from the mandrel between the first rotation abutting shaft and the second rotation abutting shaft.

Optionally, the adjusting mechanism further includes: a second moving seat movably connected to the first supporting seat, the second rotation abutting shaft being rotatably connected to the second moving seat about its axis; a second driving member mounted on the first supporting seat, and connected to the second moving seat such that the second driving member is capable of driving the second moving seat to cause the second rotation abutting shaft to move close to or away from the first rotation abutting shaft.

Optionally, the adjusting mechanism further includes: an adjusting seat provided on the first supporting seat, the detector being mounted on the adjusting seat, and a position of the adjusting seat relative to the first supporting seat being adjustable.

Optionally, the adjusting apparatus further includes a gripping mechanism which includes a gripping assembly capable of moving to a pickup position and an adjusting position; when the gripping assembly is moved to the pickup position, it is capable of gripping or releasing a mandrel; when the gripping assembly is moved to the adjusting position, the mandrel gripped by the gripping assembly is located between the first rotation abutting shaft and the second rotation abutting shaft, and the first rotation abutting shaft and the second rotation abutting shaft are capable of clamping the mandrel.

Optionally, the adhesive application apparatus includes: a movement mechanism including a first driving assembly and a shifting seat being in transmission connection with the first driving assembly, the first driving assembly being configured for driving the shifting seat to move in a second direction and a third direction which are intersected with each other; an unwinding mechanism provided on the shifting seat and configured for unwinding a double-sided adhesive tape which includes a double-sided adhesive layer and a separation film laminated together; a rewinding mechanism provided on the shifting seat, the rewinding mechanism being configured for rewinding the separation film; an adhesive application mechanism provided on the shifting seat and provided with an adhesive application wheel around which the double-sided adhesive tape winds; a trimming mechanism provided on the shifting seat and configured for cutting through the double-sided adhesive layer from an upstream side of the adhesive application wheel; wherein as the shifting seat moves in the third direction, it is capable of causing the adhesive application wheel to press the double-sided adhesive layer against the mandrel arrived at the transferring apparatus; as the shifting seat moves in the second direction, it is capable of causing the adhesive application wheel to roll along a surface of the mandrel on the transferring apparatus.

Optionally, the adhesive application apparatus further includes: an abutting mechanism provided on the shifting seat and provided with an abutting wheel downstream of the adhesive application wheel;
when the adhesive application wheel presses the double-sided adhesive layer against the mandrel on the transferring apparatus arrived at the adhesive application station, the abutting wheel abuts against the mandrel on the transferring apparatus arrived at the adhesive application station, so as to smooth the double-sided adhesive layer applied on the mandrel during movement of the abutting wheel in the second direction along with the shifting seat.

Optionally, the adhesive application mechanism is further provided with a first restraining block, and the trimming mechanism includes: a cutter seat provided on the shifting seat and capable of moving towards the adhesive application mechanism in the second direction to a trimming position; a cutter and a second restraining block, the cutter and the second restraining block being both provided on the cutter seat, the first restraining block and the second restraining block being arranged opposite to each other in the second direction, the first restraining block and the second restraining block forming a tape-through passage therebetween for the double-sided adhesive tape to pass through, and the tape-through passage being located upstream of the adhesive application wheel; when the cutter seat moves to the trimming position, the second restraining block abuts against the first restraining block, and the cutter cuts through the double-sided adhesive layer between the first restraining block and the adhesive application wheel.

Optionally, the adhesive application mechanism further includes: an adhesive application seat provided on the shifting seat, the adhesive application wheel being rotatably connected to the adhesive application seat, the first restraining block being provided on the adhesive application seat, and the first restraining block being adjustable in position relative to the adhesive application seat in the second direction.

Optionally, the first restraining block is movably connected to the adhesive application seat in the second direction, the first restraining block has a first inclined surface, and the adhesive application mechanism further includes: an adjusting wedge provided on the adhesive application seat, the adjusting wedge being provided with a second inclined surface which is parallel to and in contact with the first inclined surface, and the adjusting wedge being movable relative to the adhesive application seat in a preset direction perpendicular to the second direction, so as to push the first restraining block to move in the second direction under the guidance of the first inclined surface and the second inclined surface.

Optionally, the adhesive application seat has a blocking surface, which is parallel to a plane perpendicular to the second direction and is located on a side of the first restraining block away from the second restraining block, and the adjusting wedge is located between the first restraining block and the blocking surface.

Optionally, the abutting mechanism includes: a connecting seat provided on the shifting seat; a supporting shaft movably connected to the connecting seat, the abutting wheel being rotatably connected to the supporting shaft; a second elastic member abutting between the supporting shaft and the connecting seat so as to provide a pre-tightening force that causes the supporting shaft to give the abutting wheel a tendency to move close to the mandrel.

In another aspect of the present disclosure, the present disclosure proposes a battery winder including the mandrel feeding device as described in any of the above.

Therefore, with regard to the mandrel feeding device and the battery winder provided by the present disclosure, in the actual feeding work, the plurality of mandrels are stored on the dispensing apparatus, and the dispensing apparatus outputs the mandrels one by one. The transferring apparatus moves to the dispensing station to receive the mandrel output by the dispensing apparatus. Then, the transferring apparatus carries the mandrel and moves to the adjusting station, and at this point, the adjusting apparatus operates to drive the mandrel to rotate until the positioning portion on the mandrel rotates to the preset position, so that when the mandrel is transferred to the winding mechanism, the winding needle can be matched with the positioning portion. Then, the transferring apparatus carries the adjusted mandrel and moves to the adhesive application station, and at this point, the adhesive application apparatus applies the double-sided adhesive layer onto the mandrel on the transferring apparatus. Then, the feeding apparatus grips the mandrel on the transferring apparatus and transfers the mandrel to the winding mechanism. Then, the winding needle of the winding mechanism is inserted into the mandrel and is positioned to match with the positioning portion on the mandrel. Then, the feeding apparatus releases the mandrel and returns, thereby completing the feeding of one mandrel. In this way, by the transferring apparatus, the mandrel is transferred between the dispensing station, the adjusting station, and the adhesive application station , and thus the dispensing, adjusting, adhesive applicating, and feeding of the mandrel are sequentially completed at each station by using the dispensing apparatus, the adjusting apparatus, the adhesive application apparatus, and the feeding apparatus, resulting in high automation degree and facilitating improvement of production efficiency.

### BRIEF DESCRIPTION OF THE DRAWINGS

The above and/or additional aspects and advantages of the present disclosure will become apparent and readily appreciated from the following description of the embodiments taken in conjunction with the accompanying drawings, in which:
FIG. 1 shows a schematic structural diagram of a mandrel feeding device according to an embodiment of the present disclosure;
FIG. 2 shows a schematic structural diagram of a mandrel according to an embodiment of the present disclosure;
FIG. 3 shows a side view of a mandrel according to an embodiment of the present disclosure;
FIG. 4 shows a top view of a transferring apparatus according to an embodiment of the present disclosure;
FIG. 5 shows a schematic structural diagram of a transferring mechanism according to an embodiment of the present disclosure;
FIG. 6 shows a top view of a transferring mechanism according to an embodiment of the present disclosure;
FIG. 7 shows a schematic structural diagram of a holding structure according to an embodiment of the present disclosure;
FIG. 8 shows a side view of a holding structure according to an embodiment of the present disclosure;
FIG. 9 shows a rear view of a holding structure according to an embodiment of the present disclosure;
FIG. 10 shows a top view of a holding structure according to an embodiment of the present disclosure;
FIG. 11 shows an axonometric view of a holding structure according to an embodiment of the present disclosure;
FIG. 12 shows a partial schematic structural diagram of a wedge block according to an embodiment of the present disclosure;
FIG. 13 shows a schematic structural diagram of a dispensing apparatus according to an embodiment of the present disclosure;
FIG. 14 shows a side view of a dispensing apparatus according to an embodiment of the present disclosure;
FIG. 15 shows a stereoscopic schematic structural diagram of a dispensing apparatus according to an embodiment of the present disclosure;
FIG. 16 shows a schematic structural diagram of an adjusting apparatus according to an embodiment of the present disclosure;
FIG. 17 shows a schematic structural diagram of an adjusting mechanism according to an embodiment of the present disclosure;
FIG. 18 shows a side view of an adjusting mechanism according to an embodiment of the present disclosure;
FIG. 19 shows a schematic structural diagram of a gripping mechanism according to an embodiment of the present disclosure;
FIG. 20 shows a side view of a gripping mechanism according to an embodiment of the present disclosure;
FIG. 21 shows a schematic structural diagram of an adhesive application apparatus according to an embodiment of the present disclosure;
FIG. 22 shows a side view of an adhesive application apparatus according to an embodiment of the present disclosure;
FIG. 23 shows a schematic structural diagram of an adhesive application mechanism and a trimming mechanism according to an embodiment of the present disclosure;
FIG. 24 shows a top view of an adhesive application mechanism and a trimming mechanism according to an embodiment of the present disclosure;
FIG. 25 shows a schematic structural diagram of an adhesive application mechanism (with some components omitted) according to an embodiment of the present disclosure;
FIG. 26 shows a schematic structural diagram of an abutting mechanism according to an embodiment of the present disclosure;
FIG. 27 shows a side view of an abutting mechanism according to an embodiment of the present disclosure;
FIG. 28 shows a cross-sectional view of the abutting mechanism in FIG. 27 along the E-E direction;
FIG. 29 shows a schematic structural diagram of a feeding apparatus according to an embodiment of the present disclosure;
FIG. 30 shows a top view of a feeding apparatus according to an embodiment of the present disclosure.

Description of reference signs:
mandrel A; positioning portion a1; double-sided adhesive layer a2; double-sided adhesive tape a3; separation film a4;
dispensing station B1; adjusting station B2; adhesive application station B3;
dispensing port C;
winding mechanism D
tape-through passage h;
transferring apparatus 10;
pedestal 110; transfer-driving member 111; first lead screw 112; first lead screw nut 113; driving cylinder 115;
transferring mechanism 13; mounting seat 130; holding block 131; abutting portion 1314; supporting board 132; fixed block 133; first elastic member 134; guide bar 135; holding structure 136; movement-driving member 137; wedge block 138; first side 1380; second side 1382;
positioning mechanism 14; fixed positioning member 141; movable positioning member 142; connecting block 143; positioning-driving member 144; buffer elastic member 146;
dispensing apparatus 20;
material box 21; containment cavity 210; opening 212;
dispensing wheel 22; accommodation groove 221; inlet end 2210; outlet end 2212;
guiding member 23; guiding matching member 24; mounting frame 25; feed-driving member 26;
adjusting apparatus 30;
gripping mechanism 31; second supporting seat 310; third moving seat 311; gripping assembly 312; third driving member 313; second lead screw 314; second lead screw nut 315; guide rod 316;
adjusting mechanism 32; first supporting seat 320; third sliding rail 3201; second sliding rail 3202; second slider 3203; first rotation abutting shaft 321; second rotation abutting shaft 322; guiding shaft 323; detector 324; first adjusting block 3241; second adjusting block 3242; first waist-type hole 3243; second waist-type hole 3244; first moving seat 325; first driving member 326; first rotation driving member 327; belt drive structure 3271; second moving seat 328; second driving member 329;
adhesive application apparatus 40;
movement mechanism 41; first driving assembly 411; base 4110; moving seat 4112; first movement-driving member 4113; second movement-driving member 4114; shifting seat 412;
unwinding mechanism 43; rewinding mechanism 44;
adhesive application mechanism 45; adhesive application wheel 451; adhesive application seat 452; blocking surface 4520; first restraining block 453; first inclined surface 4531; third waist-type hole 4532; adjusting wedge 454; second inclined surface 4541; adjusting screw 455;
trimming mechanism 46; driving member 461; cutter seat 462; cutter 463; second restraining block 464;
abutting mechanism 47; abutting wheel 471; recessed surface 4710; connecting seat 472; supporting shaft 473; second elastic member 474;
feeding apparatus 50;
feeding-driving mechanism 51; third supporting seat 510; seventh sliding rail 5110; sixth sliding rail 5101; fourth moving seat 511; sixth slider 5112; fifth moving seat 512; seventh slider 5120; fourth driving member 513; third lead screw 514; fifth driving member 515; second rotation driving member 516;
holding mechanism 52;
mounting plate 60.

### DETAILED DESCRIPTION

In order to make the above objects, features and advantages of the present disclosure more clearly understood, specific embodiments of the present disclosure will be described in detail below with reference to the accompanying drawings. In the following description, numerous specific details are set forth in order to provide a thorough understanding of the present disclosure. However, the present disclosure can be implemented in various other ways different from those described here, and those skilled in the art can make similar improvements without violating a connotation of the present disclosure. Therefore, the present disclosure is not limited to the specific embodiments disclosed below.

In the description of the present disclosure, it should be understood that, an orientation or positional relationship indicated by terms "center", "longitudinal", "lateral", "length", "width", "thickness", "upper", "lower", "front", "back", "left", "right", "vertical", "horizontal", "top", "bottom", inner", "outer", "clockwise", "counterclockwise", "axial", "radial", "circumferential" is based on the orientation or positional relationship shown in the accompanying drawings, and is only for convenience of describing the present disclosure and simplifying the description, rather than indicating or implying that a device or element referred to must be provided with a particular orientation, be constructed and operate in a particular orientation, and therefore should not be understood as a limitation to the present disclosure.

In addition, terms "first" and "second" are only used for descriptive purposes and should not be understood as indicating or implying relative importance or implying a number of indicated technical features. Therefore, a feature delimited with "first", "second" may expressly or implicitly include at least one of those features. In a description of the present disclosure, "a plurality" means at least two, such as two, three, etc., unless expressly and specifically defined otherwise.

In the present disclosure, unless expressly specified and limited otherwise, terms "installed", "communicated", "connected", "fixed" and other terms should be interpreted in a broad sense, for example, it can be a fixed connection, a detachable connection, or an integrated; it can be a mechanical connection or an electrical connection; it can be directly connected, or indirectly connected through an intermediate medium, and it can be an internal communication between two elements or an interaction relationship between the two elements, unless otherwise explicitly defined. For those of ordinary skill in the art, specific meanings of the above terms in the present disclosure can be understood according to specific situations.

In the present disclosure, unless expressly stated and defined otherwise, a first feature "on" or "under" a second feature may be that the first feature is in direct contact with the second feature, or the first feature and the second feature are indirectly contacted through an intermediary. In addition, the first feature being "above", "over" and "on" the second feature may mean that the first feature is directly above or obliquely above the second feature, or simply means that the first feature is on a higher horizontal level than the second feature. The first feature being "below", "under" and "beneath" the second feature may mean that the first feature is directly below or obliquely below the second feature, or simply means that the first feature is on a lower horizontal level than the second feature.

It should be noted that when an element is referred to as being "fixed to" or "arranged on" another element, it can be directly on another element, or there may be an intervening element therebetween. When an element is referred to as being "connected" to another element, it can be directly connected to another element or intervening elements may also be present. Terms "vertical", "horizontal", "upper", "lower", "left", "right" and similar expressions used here are only for illustration purposes rather than indicating the only implementation.

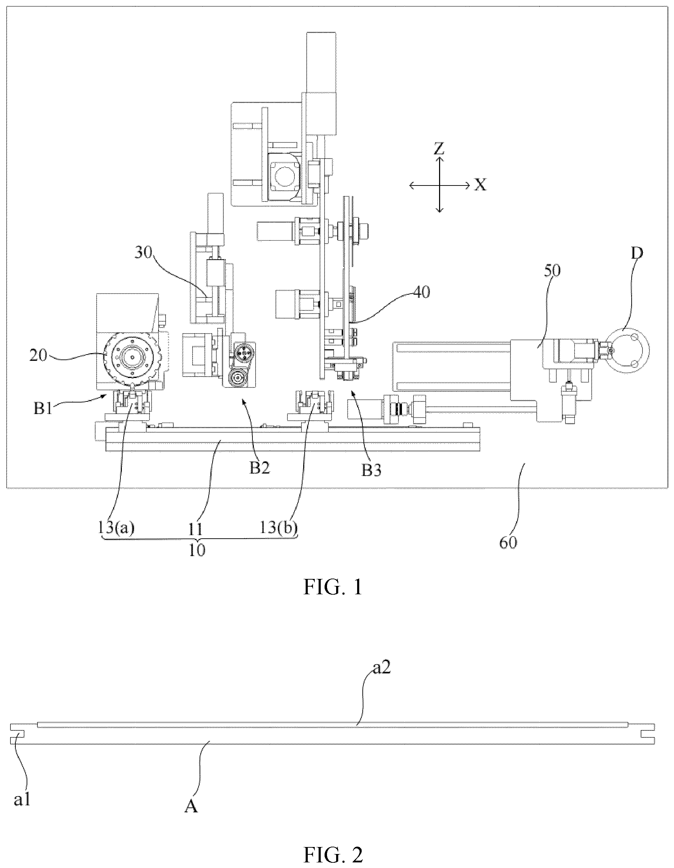

Please refer to FIG. 1, FIG. 2, and FIG. 3, an embodiment of the present disclosure provides a mandrel feeding device, which has a dispensing station B1, an adjusting station B2, an adhesive application station B3, and a feeding station (not labeled in the figures). The mandrel feeding device includes a transferring apparatus 10, a dispensing apparatus 20, an adjusting apparatus 30, an adhesive application apparatus 40, and a feeding apparatus 50.

The transferring apparatus 10 may move to the above dispensing station B1, adjusting station B2, adhesive application station B3, and feeding station. The dispensing apparatus 20 is provided at the dispensing station B1 and used for storing mandrels A and sequentially outputting mandrels A one by one. The transferring apparatus 10, when moved to the dispensing station B1, is capable of receiving the mandrels A output by the dispensing apparatus 20. The adjusting apparatus 30 is provided at the adjusting station B2 and used for causing the mandrel A, which is transferred to the adjusting station B2 by the transferring apparatus 10, to rotate until the positioning portion a1 on the mandrel A is located at a preset position, so that the positioning portion a1 on the mandrel A is matched with the winding needle of the winding mechanism D. The adhesive application apparatus 40 is provided at the adhesive application station B3, and is used for applying a double-sided adhesive layer a2 onto the mandrel A transferred to the adhesive application station B3 by the transferring apparatus 10, so that when the mandrel A is loaded onto the winding needle of the winding mechanism D, it is possible to use the double-sided adhesive layer a2 to adhere the winding material strip (which may be a diaphragm), and then the winding material strip may be wound around the mandrel A as the winding needle causes the mandrel A to rotate. The feeding apparatus 50 is provided at the feeding station, and is used for gripping the mandrel A transferred to the feeding station by the transferring apparatus 10 and for transferring the gripped mandrel A to the winding mechanism D, so that the winding needle of the winding mechanism D can be inserted into the mandrel A and be positioned to match with the positioning portion a1 of the mandrel A. Optionally, the positioning portion a1 may be a notch or protrusion opened on the mandrel A, and is used for positioning to match with the winding needle, so that the winding needle may cause the mandrel A to rotate.

With regard to the above mandrel feeding device, in the actual feeding work, the plurality of mandrels A are stored on the dispensing apparatus 20, which outputs the mandrels A one by one. The transferring apparatus 10 moves to the dispensing station B1 to receive the mandrel A output by the dispensing apparatus 20. Then, the transferring apparatus 10 carries the mandrel A and moves to the adjusting station B2, and at this point, the adjusting apparatus 30 operates to drive the mandrel A to rotate until the positioning portion a1 on the mandrel A rotates to the preset position, so that when the mandrel A is transferred to the winding mechanism D, the winding needle can be matched with the positioning portion a1. Then, the transferring apparatus 10 carries the adjusted mandrel A and moves to the adhesive application station B3, and at this point, the adhesive application apparatus 40 applies the double-sided adhesive layer a2 onto the mandrel A on the transferring apparatus 10. Then, the transferring apparatus 10 carries the mandrel A adhered with the applied double-sided adhesive layer a2 and moves to the feeding station, and at this point, the feeding apparatus 50 grips the mandrel A on the transferring apparatus 10 and transfers the mandrel A to the winding mechanism D. Then, the winding needle of the winding mechanism D is inserted into the mandrel A and is positioned to match with the positioning portion a1 on the mandrel A. Then, the feeding apparatus 50 releases the mandrel A and returns to the feeding station, thereby completing the feeding of one mandrel A. In this way, the mandrel A is transferred through the transferring apparatus 10 between the dispensing station B1, the adjusting station B2, the adhesive application station B3, and the feeding station, and thus the dispensing, adjusting, adhesive applicating, and feeding of the mandrel A are sequentially completed at each station by using the dispensing apparatus 20, the adjusting apparatus 30, the adhesive application apparatus 40, and the feeding apparatus 50, resulting in high automation degree and facilitating improvement of production efficiency.

It should be noted that the feeding station is not essential. In some other embodiments, the feeding station may not be provided. That is, the transferring apparatus 10 transfers the mandrel A to the adhesive application station B3, and the adhesive application apparatus 40 is used for performing adhesive application on the mandrel A. Then, the feeding apparatus 50 directly grips the mandrel A at the adhesive application station B3 and transfers the gripped mandrel A to the winding mechanism D.

In a specific embodiment, the mandrel feeding device further includes a mounting plate 60, on which the transferring apparatus 10, the dispensing apparatus 20, the adjusting apparatus 30, the adhesive application apparatus 40, and the feeding apparatus 50 are all mounted, so as to improve the integration of the equipment, facilitate maintenance, and reduce the required space.

In an embodiment of the present disclosure, the transferring apparatus 10 comprises two transferring mechanisms 13, one of which is capable of moving between the dispensing station B1 and the adjusting station B2, so as to receive the mandrels A output by the dispensing apparatus 20 at the dispensing station B1, and to transfer the mandrels A to the adjusting apparatus 30 at the adjusting station B2. Here, the other one of the transferring mechanisms 13 is capable of moving between the adjusting station B2 and a subsequent station (that is, the adhesive application station B3 and the feeding station), so as to receive the mandrels A transferred by the adjusting apparatus 30 at the adjusting station B2, to enable the adhesive application apparatus 40 to apply adhesive to the mandrels A at the adhesive application station B3, and to transfer the mandrels A to the feeding apparatus 50 at the feeding station.

For ease of description, the transferring mechanism 13 that moves between the dispensing station B1 and the adjusting station B2 is named the first transferring mechanism 13a, and the transferring mechanism 13 that moves between the adjusting station B2, the adhesive application station B3, and the feeding station is named the second transferring mechanism 13b. During actual feeding work, the first transferring mechanism 13a moves to the dispensing station B1 and receives the mandrel A output by the dispensing apparatus 20. Then, the first transferring mechanism 13a moves to the adjusting station B2, such that the adjusting apparatus 30 picks up the mandrel A on the first transferring mechanism 13a and cause the mandrel A to rotate until the positioning portion a1 on the mandrel A is located at the preset position. Meanwhile, the first transferring mechanism 13a returns from the adjusting station B2 to the dispensing station B1 so as to receive the next mandrel A output by the dispensing apparatus 20, and the second transferring mechanism 13b moves to the adjusting station B2. Then, the adjusting apparatus 30 transfers the adjusted mandrel A onto the second transferring mechanism 13b, and the second transferring mechanism 13b carries the adjusted mandrel A to the adhesive application station B3. Then, the adhesive application apparatus 40 applies the double-sided adhesive layer a2 onto the mandrel A on the second transferring mechanism 13b. Subsequently, the second transferring mechanism 13b carries the mandrel A with the applied adhesive layer and moves to the feeding station, and the feeding apparatus 50 grips the mandrel A on the second transferring mechanism 13b and transfers the mandrel A to the winding mechanism D. At this point, the second transferring mechanism 13b may return to the adjusting station to receive the next adjusted mandrel A.

It can be understood that the transfer process of the mandrel A by the first transferring mechanism 13a between the dispensing station B1 and the adjusting station B2, and the transfer process of the mandrel A by the second transferring mechanism 13b between the adjusting station B2, the adhesive application station B3, and the feeding station, can be carried out simultaneously, thereby significantly improving the feeding efficiency of the mandrel A.

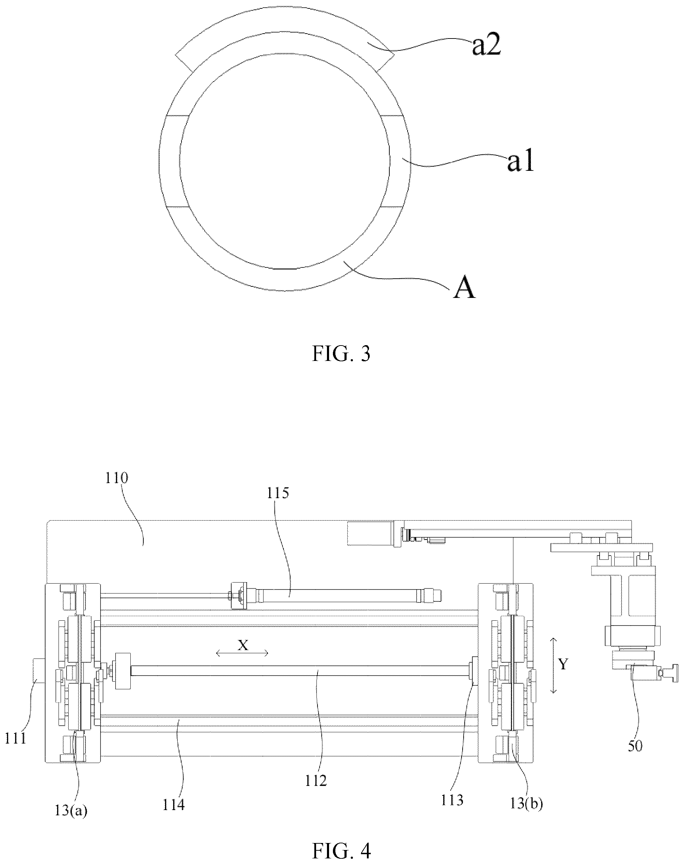

Please refer to FIG. 4, in some embodiments, the transferring apparatus 10 further includes a pedestal 110 and a first transfer driving member (not labeled in the figures) and a second transfer driving member (not labeled in the figures) provided on the pedestal 110. The pedestal 110 is fixedly mounted on the mounting plate 60. The first transferring mechanism 13a and the second transferring mechanism 13b are movably connected to the pedestal 110 along a first direction X, and are in driving connection with the first transfer driving member and the second transfer driving member respectively. This allows the first transfer driving member drives the first transferring mechanism 13a to move between the dispensing station B1 and the adjusting station B2, while the second transfer driving member drives the second transferring mechanism 13b to move between the adjusting station B2, the adhesive application station B3, and the feeding station.

Optionally, the first transfer driving member includes a driving cylinder 115, which is mounted on the pedestal 110, and a retractable end of the driving cylinder 115 is connected to the first transferring mechanism 13a, thereby driving the first transferring mechanism 13a by using the driving cylinder 115 to move in the first direction X between the dispensing station B1 and the adjusting station B2. Of course, in other embodiments, the first transfer driving member may also employ other linear drive modules, as long as it can drive the first transferring mechanism 13a to move in the first direction X between the dispensing station B1 and the adjusting station B2, which is not limited herein.

Optionally, the second transfer driving member includes a first lead screw 112, a transfer-driving member 111, and a first lead screw nut 113. The first lead screw 112 is rotatably connected to the pedestal 110 about its own axis, and the axial direction of the first lead screw 112 is parallel to the first direction X. The transfer-driving member 111 is mounted on the pedestal 110 and is in driving connection with the first lead screw 112, so as to drive the first lead screw 112 to rotate about its own axis. The first lead screw nut 113 is threadedly connected to the first lead screw 112 and is fixedly connected to the second transferring mechanism 13b, so that the first lead screw nut 113 and the second transferring mechanism 13b move together in the first direction X. In this way, when the transfer-driving member 111 drives the first lead screw 112 to rotate, the first lead screw nut 113 is moved along the axial direction of the first lead screw 112 (i.e., the first direction X), thereby causing the second transferring mechanism 13b to move in the first direction X between the adjusting station B2, the adhesive application station B3, and the feeding station. Optionally, the transfer-driving member 111 may be a motor. Of course, in other embodiments, the second transfer driving member may also employ other linear drive modules, as long as it can drive the second transferring mechanism 13b to move in the first direction X between the adjusting station B2, the adhesive application station B3, and the feeding station, which is not limited herein.

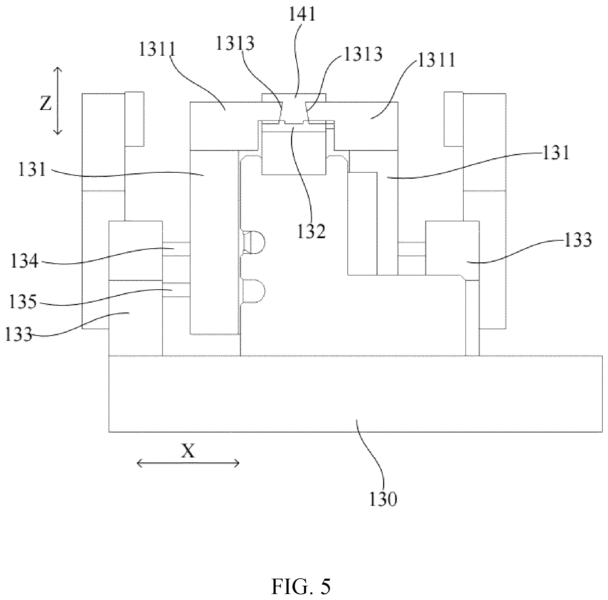

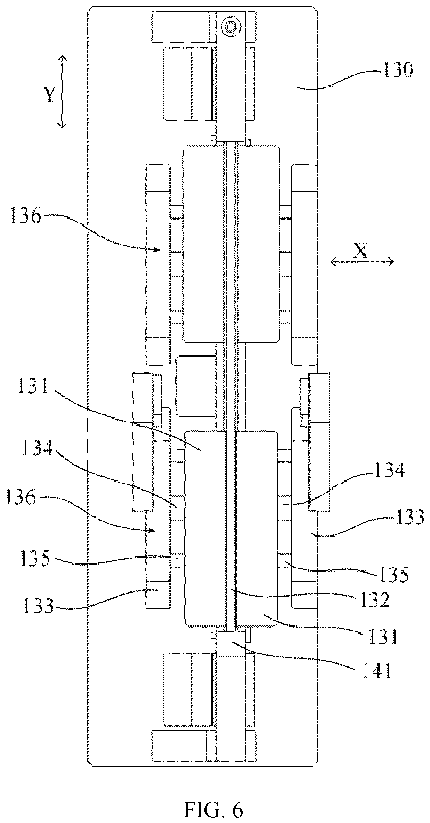

Please refer to FIG. 5 and FIG. 6, in an embodiment of the present disclosure, the transferring mechanism 13 includes a mounting seat 130, a supporting board 132, and a holding structure 136. The mounting seat 130 is movably connected to the pedestal 110 in the first direction X, and is connected to the first transfer driving member or the second transfer driving member, so as to be driven to move in the first direction X by the first transfer driving member or the second transfer driving member. The supporting board 132 is mounted on the mounting seat 130, and is used for receiving the mandrel A. The holding structure 136 is used for holding or releasing the mandrel A borne on the supporting board 132. Specifically, the holding structure 136 includes two holding blocks 131, which are provided on the mounting seat 130 and are located on both sides of the supporting board 132 in the first direction X (in the embodiment shown in FIG. 6, the two holding blocks 131 are respectively located on the left and right sides of the supporting board 132). The two holding blocks 131 may be moved close to or away from each other in a controlled way, so as to hold or release the mandrel A borne on the supporting board 132. In this way, at the dispensing station B1, the mandrel A output from the dispensing apparatus 20 is fed onto the supporting board 132 of the first transferring mechanism 13a, and then the two holding blocks 131 of the first transferring mechanism 13a are controlled to move close to each other until they clamp the mandrel A on the supporting board 132. At the adjusting station B2, the adjusting apparatus 30 places the adjusted mandrel A on the supporting board 132 of the second transferring mechanism 13b, and then the two holding blocks 131 of the second transferring mechanism 13b are controlled to move close to each other until they clamp the mandrel A on the supporting board 132.

Optionally, there are a plurality of holding structures 136, and the plurality of holding structures 136 are arranged at intervals along a second direction Y perpendicular to the first direction X. When the mandrel A is borne on the supporting board 132, the longitudinal direction of the mandrels A is parallel to the second direction Y. In this way, by using the plurality of holding structures 136 arranged at intervals along the longitudinal direction of the mandrels A to simultaneously hold the mandrels A, the holding of the mandrel A is more stable. In a specific embodiment shown in FIG. 6, the number of holding structures 136 is two.

Optionally, the pedestal 110 is provided with a first sliding rail 114 (see FIG. 4) extending longitudinally in the first direction X, and the mounting seats 130 of the two transferring mechanisms 13 are each provided with a first slider (not shown in the figures). Each first slider is matched with the first sliding rail 114 in a sliding way, thereby guiding the two transferring mechanisms 13 in the first direction X by using the movement of the two first sliders along the first sliding rail 114.

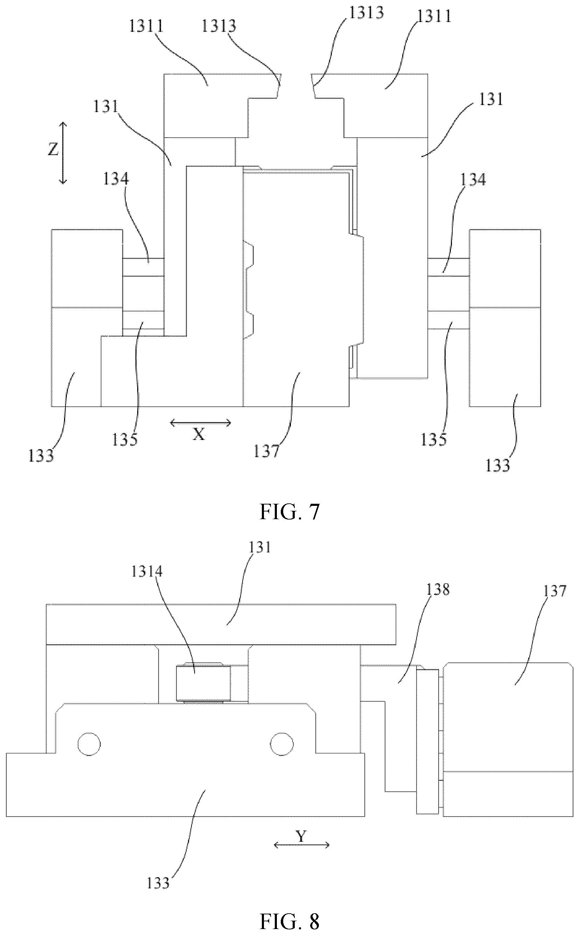

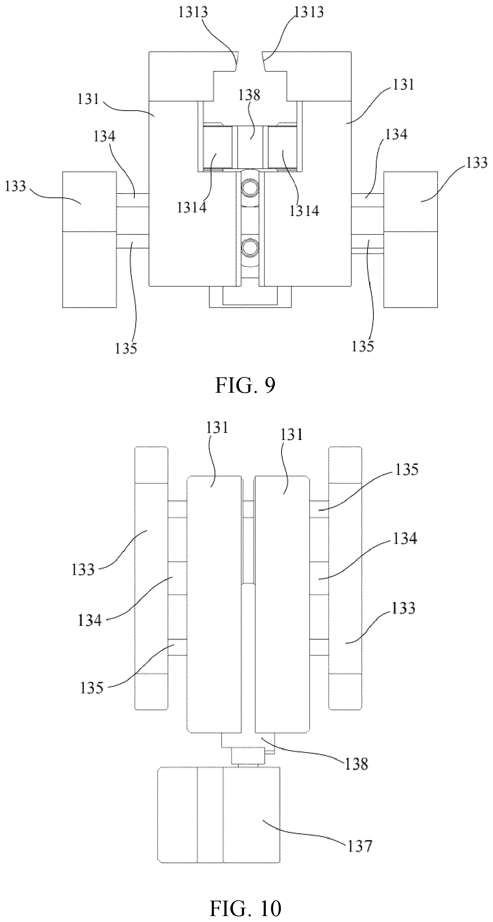

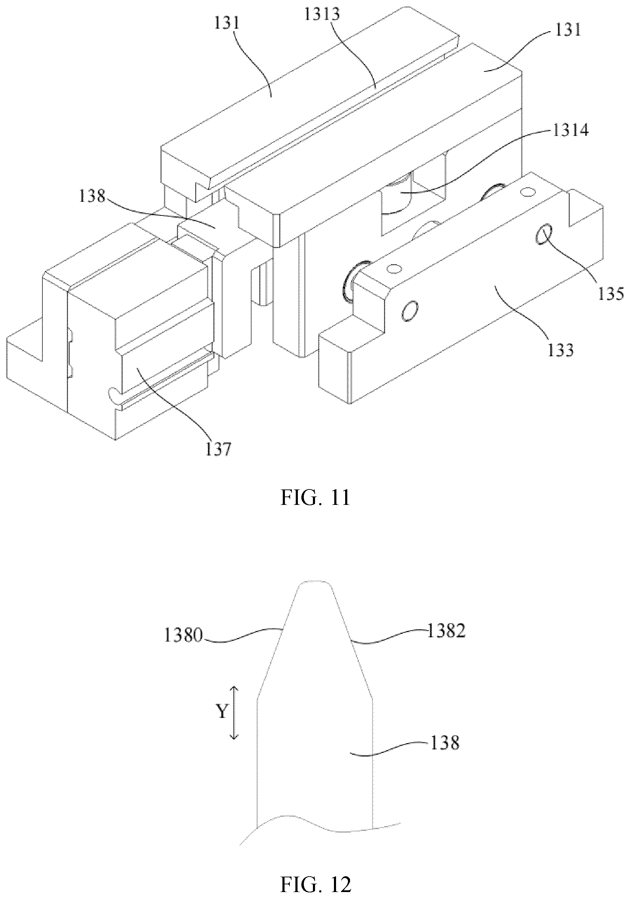

Please refer to FIG. 7 to FIG. 12, in a specific embodiment, the holding structure 136 further comprises a first elastic member 134 and a wedge block 138 which are both provided on the mounting seat 130. Each of the two holding blocks 131 is correspondingly provided with the first elastic member 134, and the first elastic members 134 each abuts against a corresponding holding block 131 so as to provide a pre-tightening force that gives the two holding blocks 131 a tendency to move close to each other. The wedge block 138 is located between the two holding blocks 131, and each of the two holding blocks 131 is provided with an abutting portion 1314 that abuts against the wedge block 138. The wedge block 138 is capable of moving in a controlled way between two abutting portions 1314 so as to drive the two holding blocks 131 to move close to or away from each other, thereby holding or releasing the mandrel A borne on the supporting board 132. Optionally, the first elastic member 134 may be a spring.

Specifically, the wedge block 138 includes a first side 1380 and a second side 1382 that face away from each other in the first direction X. The abutting portions 1314 on the two holding blocks 131 respectively abut against the first side 1380 and the second side 1382 of the wedge block 138. This wedge block 138 may be moved back and forth in the second direction Y in a controlled way, with the distance between the first side 1380 and the second side 1382 being set to gradually increase or decrease in the second direction Y, which is perpendicular to the first direction X. As such, due to the gradual increase or decrease in the distance between the first side 1380 and the second side 1382 in the second direction Y, during movement of the wedge block 138 in the second direction Y, under the combined action of the first elastic members 134 and the wedge block 138, the wedge block 138 may cause the two holding blocks 131 to move close to or away from each other, thereby clamping or releasing the mandrel A on the supporting board 132.

Optionally, both abutting portions 1314 are rollers, and the rollers on the two holding blocks 131 may roll along the first side 1380 and the second side 1382, respectively. In this way, by providing both abutting portions 1314 as rollers, on one hand, it is conducive to reducing the friction between the abutting portion 1314 and the wedge block 138, thereby reducing wear and prolonging the service life; on the other hand, it is conducive to enhancing the mobility of the wedge block 138.

Further, the holding structure 136 further includes a movement-driving member 137 provided on the mounting seat 130. The movement-driving member 137 is connected to the wedge block 138, such that the movement-driving member 137 may drive the wedge block 138 to move back and forth in the second direction Y. Optionally, the movement-driving member 137 may be an air cylinder.

In a specific embodiment, the holding structure 136 further includes two fixed blocks 133 and a guide bar 135. These two fixed blocks 133 are fixedly connected to the mounting seat 130 at intervals in the first direction X, and the supporting board 132 is located between the two fixed blocks 133. Both ends of the guide bar 135 are connected to the two fixed blocks 133 respectively. The two holding blocks 131 are slidably connected to the guide bar 135, allowing the two holding blocks 131 to move close to or away from each other along the guide bar 135. One of the first elastic members 134 abuts between one of the fixed blocks 133 and the adjacent holding block 131, while the other of the first elastic member 134 abuts between the other fixed block 133 and the adjacent holding block 131. It should be noted that the number of the guide bars 135 may be two or more so as to simultaneously guide the movement of the holding blocks 131 by using each guide bar 135, such that the movement of the holding blocks 131 is more stable and reliable.

Optionally, each of the both holding blocks 131 is provided with a holding portion 1311. The two holding portions 1311 are arranged facing towards each other in the first direction X, and each holding portion has a holding slope 1313 on the side facing towards the other holding portion. The two holding portions 1311 clamp or release the mandrel A on the supporting board 132 through their respective holding slopes 1313. The spacing between the two holding slopes 1313 is designed to gradually decrease in a direction from an end closer to the supporting board 132 to an end farther from the supporting board 132 (i.e., the spacing between the two holding slopes 1313 as shown in FIG. 5 decreases in a direction from bottom to top), so that when the two holding portions 1311 clamp the mandrel A on the supporting board 132 between the two holding slopes 1313, the clamping force applied to the mandrel A has a component force (i.e., the downward component force as shown in FIG. 5) directed towards the supporting board 132, ensuring that the mandrel A is not only clamped but also tightly pressed against the supporting board 132, allowing the mandrel A to be held more firmly.

Further, the supporting board 132 is provided with a positioning groove (not shown in the figures) for positioning the mandrel A, which extends longitudinally in the second direction Y perpendicular to the first direction X. As such, when the mandrel A is fed into the supporting board 132, it is accommodated in the positioning groove, so as to position the mandrel A in the first direction X by utilizing the positioning groove, thereby preventing the mandrel A from rolling randomly before it is clamped by the two holding blocks 131.

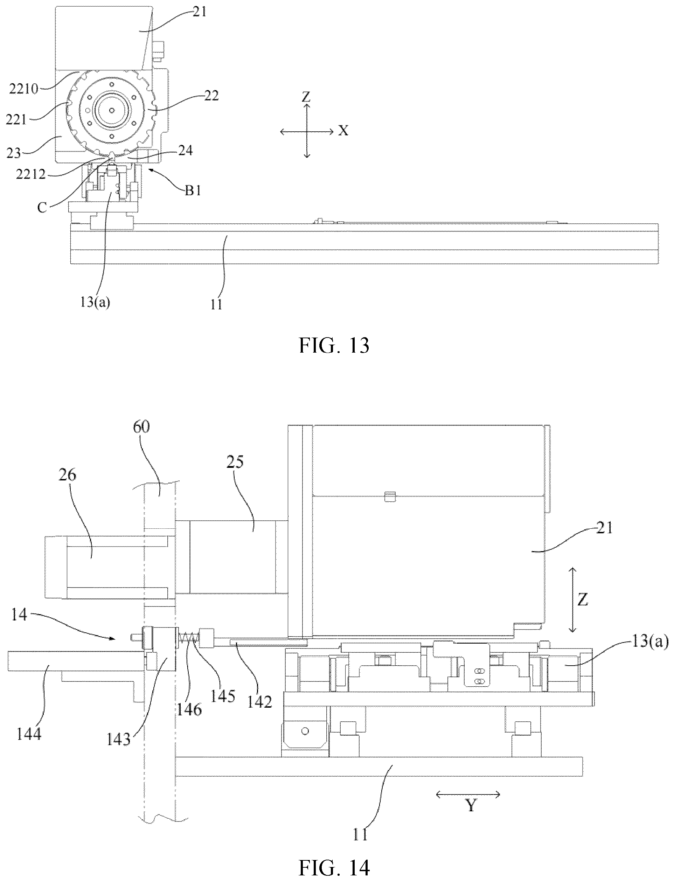

In a specific embodiment, the transferring mechanism 13 further includes a fixed positioning member 141 connected to the mounting seat 130, and the fixed positioning member 141 is located at one end of the positioning groove in the second direction Y, and is used for abutting against one end of the mandrel A in the positioning groove, thereby positioning the mandrel A in the second direction Y. Please refer to FIG. 14, the transferring apparatus 10 further includes a positioning mechanism 14 provided at the dispensing station B1, and the positioning mechanism 14 includes a movable positioning member 142. When the transferring mechanism 13 moves to the dispensing station B1, the movable positioning member 142 is located at the other end of the positioning groove (that is, at this point, the movable positioning member 142 and the fixed positioning member 141 are located respectively at each of the two ends of the positioning groove in the second direction Y), and the movable positioning member 142 may be moved close to or away from the fixed positioning member 141 in the second direction Y in a controlled way, so as to clamp or release the mandrel A in the positioning groove together with the fixed positioning member 141. As such, when the transferring mechanism 13 moves to the dispensing station B1, firstly, the mandrel A output by the dispensing apparatus 20 falls into the positioning groove of the supporting board 132 of the transferring mechanism 13. Then, the movable positioning member 142 moves closer to the fixed positioning member 141 in the second direction Y until the mandrel A in the positioning groove is pressed against the fixed positioning member 141 (i.e., at this point, the movable positioning member 142 and the fixed positioning member 141 jointly clamp the mandrel A in the positioning groove). Afterwards, the movable positioning member 142 is moved further away from the fixed positioning member 141 in the second direction Y until it returns to its initial position, thereby finishes positioning of the mandrel A in the positioning groove in the second direction Y. Then, the two holding blocks 131 are moved closer to each other until they clamp the mandrel A in the positioning groove.

Further, the positioning mechanism 14 further includes a positioning-driving member 144, a connecting block 143, and a buffer elastic member 146. The positioning-driving member 144 is mounted on the mounting plate 60, and the connecting block 143 is mounted on a driving end of the positioning-driving member 144, so as to be driven to move back and forth in the second direction Y by the positioning-driving member 144. The movable positioning member 142 is movably connected to the connecting block 143 in the second direction Y. The buffer elastic member 146 abuts between the connecting block 143 and the movable positioning member 142, so as to provide a pre-tightening force that gives the movable positioning member 142 a tendency to move away from the connecting block 143 in the second direction Y. Thus, when it is necessary to position the mandrel A in the positioning groove, the positioning-driving member 144 drives the movable connecting block 143 to move close to the fixed positioning member 141 in the second direction Y, causing the movable positioning member 142 to push the mandrel A in the positioning groove towards the fixed positioning member 141 until the mandrel A is pressed against the fixed positioning member 141. At this point, the buffer elastic member 146 is compressed to provide a cushioning effect, avoiding damage to the mandrel A by the movable positioning member 142 and the fixed positioning member 141. Optionally, the buffer elastic member 146 may be a spring, and the positioning-driving member 144 may be an air cylinder.

Please refer to FIGS. 13 to 15, in an embodiment of the present disclosure, the dispensing apparatus 20 comprises a material box 21 and a dispensing wheel 22. The material box 21 is provided with a containment cavity 210 for containing a plurality of mandrels A, and an opening 212 at a bottom of the containment cavity 210. The dispensing wheel 22 is rotatably provided below the material box 21. The dispensing wheel 22 is opened with a plurality of accommodation grooves 221 on a peripheral surface thereof, and the plurality of accommodation grooves 221 are arranged at intervals in a circumferential direction of the dispensing wheel 22, such that each accommodation groove 221 passes over the opening 212 one by one during the rotation of the dispensing wheel 22. Here, each of the accommodation grooves 221 is used for accommodating a mandrel A when rotating to the opening 212 along with the dispensing wheel 22, and transferring the mandrel A onto the supporting board 132 of the first transferring mechanism 13a of the transferring apparatus 10 when rotating to an outlet position along with the dispensing wheel 22.

During actual use, as the dispensing wheel 22 rotates, the accommodation grooves 221 on the dispensing wheel 22 also rotate along with the dispensing wheel 22. When the accommodation grooves 221 rotates to pass over the opening 212, the mandrel A in the containment cavity 210 enters the accommodation groove 221 through the opening 212, and then leaves the opening 212 along with the accommodation groove 221. When the accommodation groove 221 containing the mandrel A rotates to the outlet position, the mandrel A in the accommodation groove 221 falls down to the supporting board 132 of the first transferring mechanism 13a arrived at the dispensing station B1 under its own gravity.

Thus, by continuously rotating the dispensing wheel 22 to cause each accommodation grooves 221 to pick up the mandrels A at the opening 212 and output it at the outlet position, the transferring mechanism 13 may transfer the mandrels A from the dispensing station B1 to the adjusting station B2 one by one, that is, achieving continuous dispensing of the mandrels A through rotation of the dispensing wheel 22, which is conducive to improving the feeding efficiency of the mandrels A.

Optionally, the opening 212 is located at the top of the dispensing wheel 22, so that the mandrels A in the containment cavity 210 may fall into the accommodation groove 221 arrived at the opening 212 under its own gravity. The outlet position is located at the bottom of the dispensing wheel 22, so that the mandrel A in the accommodation groove 221 that has rotated to the bottom of the dispensing wheel 22 may fall onto the supporting board 132 of the first transferring mechanism 13a under its own gravity.

In a specific embodiment, the dispensing apparatus 20 further comprises a guiding member 23, which is arranged around the dispensing wheel 22 and forms a conveying channel (not labeled in the figures) with the peripheral surface of the dispensing wheel 22, so that the mandrels A accommodated in the accommodation grooves 221 are moved along the conveying channel following the dispensing wheel 22 as the dispensing wheel 22 rotates, thereby preventing the mandrels A from falling out of the accommodation grooves 221 before arriving at the outlet position. The guiding member 23 is provided with an inlet end 2210 at the opening 212 and an outlet end 2212 at the outlet position. During rotating of the dispensing wheel 22, the mandrels A accommodated in the accommodation grooves 221 enter the conveying channel from the inlet end 2210 and are conveyed from the outlet end 2212 to the supporting board 132 of the transferring mechanism 13 arrived at the dispensing station B1.

Therefore, the provision of the guiding member 23 prevents the mandrels A in the accommodation grooves 221 from falling out before they arrive at the outlet position following the rotation of the dispensing wheel 22, such that all the mandrels A in the accommodation grooves 221 can smoothly rotate to the outlet position along with the dispensing wheel 22, and be conveyed to the supporting board 132 of the transferring mechanism 13 arrived at the dispensing station B1.

It should be noted that it is not limited to using the guiding member 23 to prevent the mandrel A from falling before arriving at the outlet position following the rotation of the dispensing wheel 22. In some other embodiments, methods such as magnetic attraction or gripping may also be used to fix the mandrels A in the accommodation grooves 221, and then release the mandrels A upon arriving at the outlet position, ensuring that the mandrels A may be smoothly arrive at the outlet position and fall onto the supporting board 132 of the transferring mechanism 13 at the outlet position.

In a specific embodiment, the dispensing apparatus 20 further comprises a guiding matching member 24 provided at the outlet position. The guiding matching member 24 forms a dispensing port C with the outlet end 2212 of the guiding member 23. The mandrels A accommodated in the accommodation grooves 221, when rotating to the dispensing port C along with the dispensing wheel 22, fall onto the supporting board 132 of the transferring mechanism 13 from the dispensing port C under their own gravity. Thus, the mandrels A are fed through the dispensing port C formed between the outlet end 2212 of the guiding member 23 and the guiding matching member 24 so as to limit the dispensing position of the mandrel A, thereby ensuring that the mandrels A accurately fall into the positioning groove on the supporting board 132 of the transferring mechanism 13.

Further, the dispensing apparatus 20 further includes a mounting frame 25 and a feed-driving member 26. The mounting frame 25 is fixedly connected to the mounting plate 60, and the material box 21 is fixedly connected to the mounting frame 25, while the dispensing wheel 22 is rotatably connected to the mounting frame 25. The feed-driving member 26 is mounted on the mounting frame 25 and is connected to the dispensing wheel 22, enabling the feed-driving member 26 to drive the dispensing wheel 22 to rotate. The above guiding member 23 and guiding matching member 24 are both mounted on the mounting frame 25. Optionally, the feed-driving member 26 may be a motor.

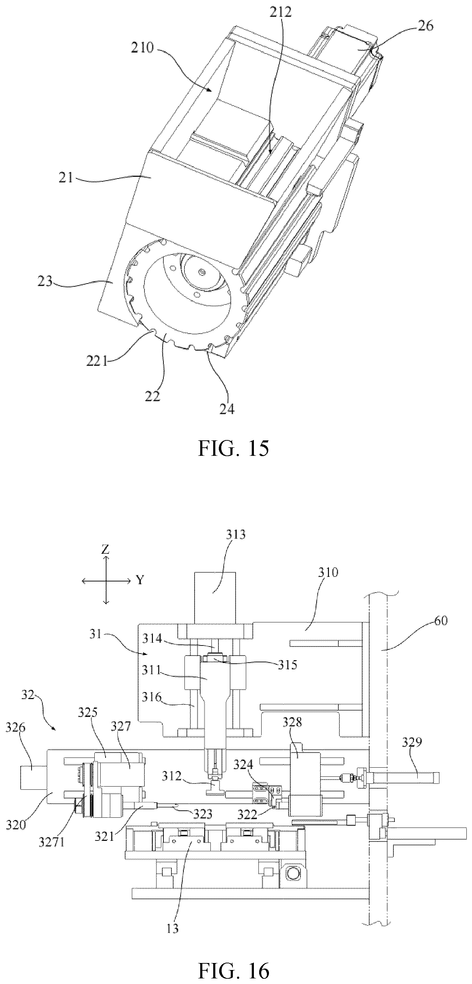

Please refer to FIG. 16, in an embodiment of the present disclosure, the adjusting apparatus 30 includes an adjusting mechanism 32. The adjusting mechanism 32 includes a first supporting seat 320, and a first rotation abutting shaft 321 and a second rotation abutting shaft 322 which are both rotatably connected to the first supporting seat 320 around their own axes. The first supporting seat 320 is fixedly connected to the mounting plate 60. The axis of the first rotation abutting shaft 321 and the second rotation abutting shaft 322 are collinear (i.e., the first rotation abutting shaft 321 and the second rotation abutting shaft 322 are coaxial). The first rotation abutting shaft 321 and the second rotation abutting shaft 322 are spaced apart from each other, and the mandrel A transferred by the transferring apparatus 10 to the adjusting station may be moved in a controlled way between the first rotation abutting shaft 321 and the second rotation abutting shaft 322. The first rotation abutting shaft 321 and the second rotation abutting shaft 322 may be moved in a controlled way closer to or farther away from each other, so as to clamp or release the mandrel A located between the first rotation abutting shaft 321 and the second rotation abutting shaft 322. Optionally, the axes of the first rotation abutting shaft 321 and the second rotation abutting shaft 322 are parallel to the second direction Y, and the first rotation abutting shaft 321 and the second rotation abutting shaft 322 are arranged at intervals in the second direction Y.

The adjusting mechanism 32 further includes a detector 324 configured for detecting a position of a positioning portion a1 on the mandrel A clamped between the first rotation abutting shaft 321 and the second rotation abutting shaft 322. Optionally, the detector 324 may be a through-beam photoelectric sensor.

In a specific embodiment, the adjusting apparatus 30 further includes a gripping mechanism 31, which includes a gripping assembly 312. The gripping assembly 312 is capable of moving in the third direction Z to the pickup position and the adjusting position, and the third direction Z intersects with both the first direction X and the second direction Y. Preferably, the third direction Z is perpendicular to both the first direction X and the second direction Y. When the gripping assembly 312 is moved to the pickup position, it may grip the mandrel A on the first transferring mechanism 13a arrived at the adjusting station B2 or place the mandrel A onto the second transferring mechanism 13b arrived at the adjusting station B2. When the gripping assembly 312 is moved to the adjusting station B2, the mandrel A gripped by the gripping assembly 312 arrives at between the first rotation abutting shaft 321 and the second rotation abutting shaft 322, enabling the first rotation abutting shaft 321 and the second rotation abutting shaft 322 to move close to each other until they respectively abut against the two ends of the mandrel A, i.e., clamping the mandrel A in the second direction Y (i.e., the axial direction of the mandrel A) by using the first rotation abutting shaft 321 and the second rotation abutting shaft 322.

Thus, when the first transferring mechanism 13a moves to the adjusting station B2, firstly, the gripping assembly 312 is moved close to the first transferring mechanism 13a in the third direction Z until the gripping assembly 312 arrives at the pickup position. At this point, the gripping assembly 312 grips the mandrel A on the first transferring mechanism 13a, and the holding structure 136 of the first transferring mechanism 13a releases its grip on the mandrel A. Then, the gripping assembly 312 is moved away from the first transferring mechanism 13a in the third direction Z until it arrives at the adjusting position. At this point, the mandrel A gripped by the gripping assembly 312 is positioned between the first rotation abutting shaft 321 and the second rotation abutting shaft 322, and the first transferring mechanism 13a may return from the adjusting station B2 to the dispensing station B1, while the second transferring mechanism 13b may move to the adjusting station B2. Next, the first rotation abutting shaft 321 and the second rotation abutting shaft 322 are moved close to each other until they respectively abut against the two ends of the mandrel A in the longitudinal direction (i.e., clamping the mandrel A in the second direction Y). At this point, the gripping assembly 312 releases the mandrel A, and the first rotation abutting shaft 321 and the second rotation abutting shaft 322 cause the mandrel A to rotate. When the detector 324 detects that the positioning portion a1 on the mandrel A has arrived at the preset position, the first rotation abutting shaft 321 and the second rotation abutting shaft 322 stop rotating, thus completing the adjustment of the mandrel A. Then, the gripping assembly 312 grips the mandrel A again, and the first rotation abutting shaft 321 and the second rotation abutting shaft 322 are moved away from each other, so as to release the mandrel A. Then, the gripping assembly 312 is moved close to the second transferring mechanism 13b in the third direction Z, until the mandrel A is placed on the supporting board 132 of the second transferring mechanism 13b and clamped by the holding structure 136. Then, the gripping assembly 312 releases the mandrel A and is moved away from the second transferring mechanism 13b in the third direction Z to return. At this point, the second transferring mechanism 13b may move from the adjusting station B2 towards the adhesive application station B3.

It should be noted that it is not limited to using the gripping mechanism 31 to arrive at or leave the position between the first rotation abutting shaft 321 and the second rotation abutting shaft 322. In some other embodiments, a transferring mechanism 13 with a lifting function may also be used, that is, through the lifting of the transferring mechanism 13 itself, to enable the mandrel A to arrive at or leave a position between the first rotation abutting shaft 321 and the second rotation abutting shaft 322, which is not limited herein.

In a specific embodiment, the adjusting mechanism 32 further comprises a guiding shaft 323, which is connected to an end of the first rotation abutting shaft 321 facing towards the second rotation abutting shaft 322. As the first rotation abutting shaft 321 and the second rotation abutting shaft 322 move closer to or farther away from each other, the guiding shaft 323 is inserted into or withdrawn from a central hole of the mandrel A located between the first rotation abutting shaft 321 and the second rotation abutting shaft 322. Thus, when the mandrel A gripped by the gripping assembly 312 arrives at the adjusting position, the first rotation abutting shaft 321 and the second rotation abutting shaft 322 move close to each other, such that the guiding shaft 323 is inserted into the central hole of the mandrel A for alignment of the mandrel A, until the first rotation abutting shaft 321 and the second rotation abutting shaft 322 respectively abut against the two ends of the mandrel A in the longitudinal direction, so as to clamp the mandrel A.

Of course, in other embodiments, the guiding shaft 323 may also be connected to one end of the second rotation abutting shaft 322 facing towards the first rotation abutting shaft 321, and may also play a role in aligning the mandrel A, which is not limited herein.

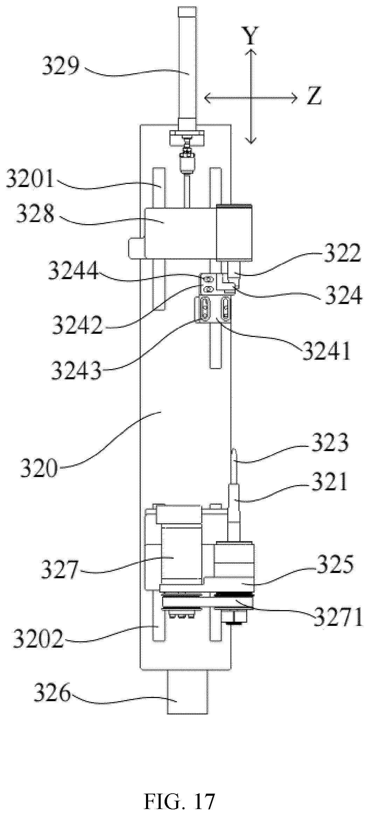

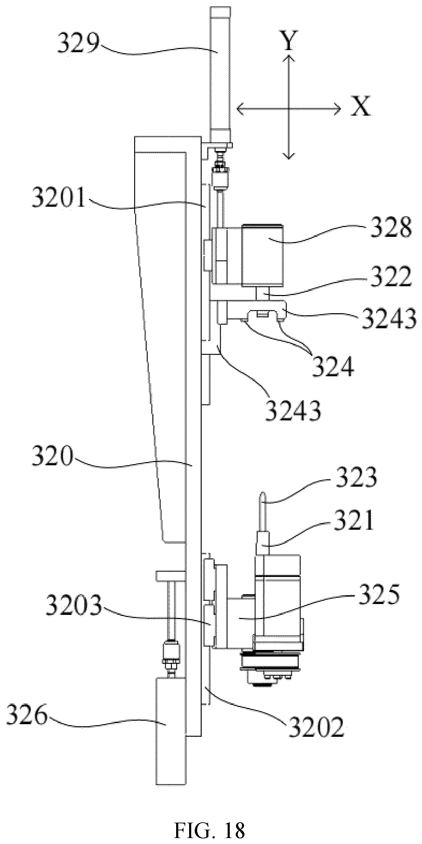

Please refer to FIGS. 17 to 18, in a specific embodiment, the adjusting mechanism 32 further includes a first moving seat 325 and a first driving member 326. The first moving seat 325 is movably connected to the first supporting seat 320 in the second direction Y. The first rotation abutting shaft 321 is rotatably connected to the first moving seat 325 around its own axis, so that the first moving seat 325 may cause the first rotation abutting shaft 321 to move in the second direction Y. The first driving member 326 is mounted on the first supporting seat 320 and is connected to the first moving seat 325, such that the first driving member 326 can drive the first moving seat 325 to move relative to the first supporting seat 320 in the second direction Y, and such that the first moving seat 325 causes the first rotation abutting shaft 321 to move close to or away from the second rotation abutting shaft 322. Optionally, the first driving member 326 may be an air cylinder.

Optionally, the first supporting seat 320 is provided with a second sliding rail 3202 extending longitudinally in the second direction Y, and the first moving seat 325 is provided with a second slider 3203 that slidably cooperates with the second sliding rail 3202. Thus, the movement of the second slider 3203 along the second sliding rail 3202 is utilized to guide the movement of the first moving seat 325 relative to the first supporting seat 320 in the second direction Y.

Optionally, the first rotation abutting shaft 321 is mounted on the first moving seat 325 via a bearing, allowing the first rotation abutting shaft 321 to rotate relative to the first moving seat 325.

In a specific embodiment, the adjusting mechanism 32 further includes a second moving seat 328 and a second driving member 329. The second moving seat 328 is movably connected to the first supporting seat 320 in the second direction Y. The second rotation abutting shaft 322 is rotatably connected to the second moving seat 328 around its own axis, such that the second rotation abutting shaft 322 may be moved in the second direction Y under the drive of the second moving seat 328. The second driving member 329 is mounted on the first supporting seat 320 and is connected to the second moving seat 328, such that the second driving member 329 may drive the second moving seat 328 to move relative to the first supporting seat 320 in the second direction Y, thereby causing the second moving seat 328 to move the second rotation abutting shaft 322 close to or away from the first rotation abutting shaft 321. Optionally, the second driving member 329 may be an air cylinder.

Optionally, the first supporting seat 320 is provided with a third sliding rail 3201 extending longitudinally in the second direction Y, and the second moving seat 328 is provided with a third slider that slidably cooperates with the third sliding rail 3201. Thus, the movement of the third slider along the third sliding rail 3201 guides the movement of the second moving seat 328 relative to the first supporting seat 320 in the second direction Y.

Optionally, the second rotation abutting shaft 322 is mounted on the second moving seat 328 via a bearing, allowing the second rotation abutting shaft 322 to rotate relative to the second moving seat 328.

Specifically, the adjusting mechanism 32 further includes a first rotation driving member 327 mounted on the first moving seat 325, and the first rotation driving member 327 is connected to the first rotation abutting shaft 321, such that the first rotation driving member 327 may drive the first rotation abutting shaft 321 to rotate, thereby causing the mandrel A clamped by the first rotation abutting shaft 321 and the second rotation abutting shaft 322 to rotate. Further, the output shaft of the first rotation driving member 327 and the first rotation abutting shaft 321 are connected via a belt drive structure 3271, such that the rotational motion output by the first rotation driving member 327 is transmitted to the first rotation abutting shaft 321 through the belt drive structure 3271, thereby driving the first rotation abutting shaft 321 to rotate.

Of course, in another embodiment, the first rotation driving member 327 may also be mounted on the second moving seat 328, and the first rotation driving member 327 is connected to the second rotation abutting shaft 322, such that the first rotation driving member 327 may drive the second rotation abutting shaft 322 to rotate, thereby causing the mandrel A clamped by the first rotation abutting shaft 321 and the second rotation abutting shaft 322 to rotate.

In some embodiments, the adjusting mechanism 32 further includes an adjusting seat (not shown in the figures) provided on the first supporting seat 320, and the detector 324 is mounted on the adjusting seat. The position of the adjusting seat relative to the first supporting seat 320 is adjustable, thereby allowing the position of the detector 324 to be adjusted through the adjusting seat. Optionally, the position of the adjusting seat relative to the first supporting seat 320 is adjustable in the second direction Y and/or the third direction Z. Thus, by adjusting the position of the adjusting seat relative to the first supporting seat 320 in the second direction Y and/or the third direction Z, the position of the detector 324 in the second direction Y and/or the third direction Z can be adjusted, so as to accommodate different specifications of the mandrel A, enhancing the compatibility of the equipment.

Further, the adjusting seat includes a first adjusting block 3241, a first threaded locking member, a second adjusting block 3242, and a second threaded locking member. The first adjusting block 3241 is opened with a first waist-type hole 3243, which extends longitudinally in the second direction Y. The first threaded locking member penetrates the first waist-type hole 3243, and is threadedly connected to the first supporting seat 320, so as to fasten the first adjusting block 3241 to the first supporting seat 320. The second adjusting block 3242 is opened with a second waist-type hole 3244, which extends longitudinally in the third direction Z. The second threaded locking member penetrates the second waist-type hole 3244, and is threadedly connected to the first adjusting block 3241, so as to fasten the second adjusting block 3242 to the first adjusting block 3241. The detector 324 is mounted on the second adjusting block 3242 to perform position adjustment along with the second adjusting block 3242. Optionally, both the first threaded locking member and the second threaded locking member may use locking screws.

Thus, when it is necessary to adjust the position of the detector 324 in the second direction Y, firstly loosening the first threaded locking member and pushing the first adjusting block 3241 to move relative to the first supporting seat 320 in the second direction Y, thereby causing the second adjusting block 3242 and the detector 324 to move in the second direction Y. Once the detector 324 is adjusted in position in the second direction Y, tightening the first threaded locking member so as to lock and fix the first adjusting block 3241 to the first supporting seat 320.

When it is necessary to adjust the position of the detector 324 in the third direction Z, firstly loosening the second threaded locking member and pushing the second adjusting block 3242 to move relative to the first adjusting block 3241 in the third direction Z, thereby causing the detector 324 to move in the third direction Z. Once the position of the detector 324 in the third direction Z is adjusted in position in the third direction Z, tightening the second threaded locking member so as to lock and fix the second adjusting block 3242 to the first adjusting block 3241.

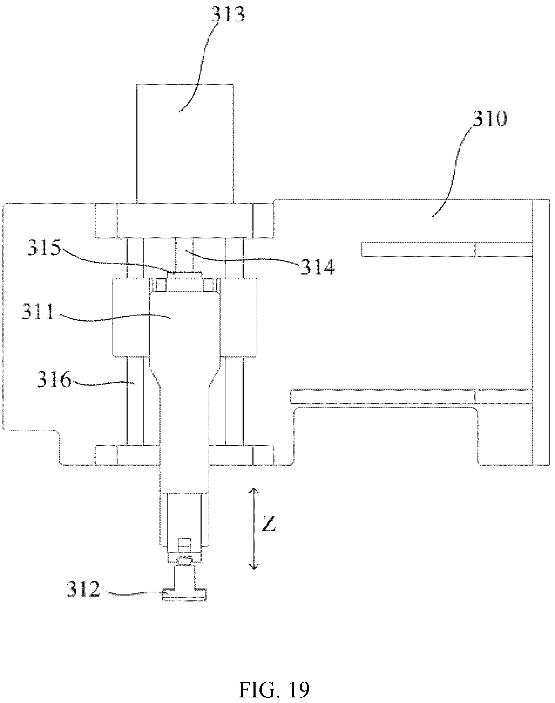

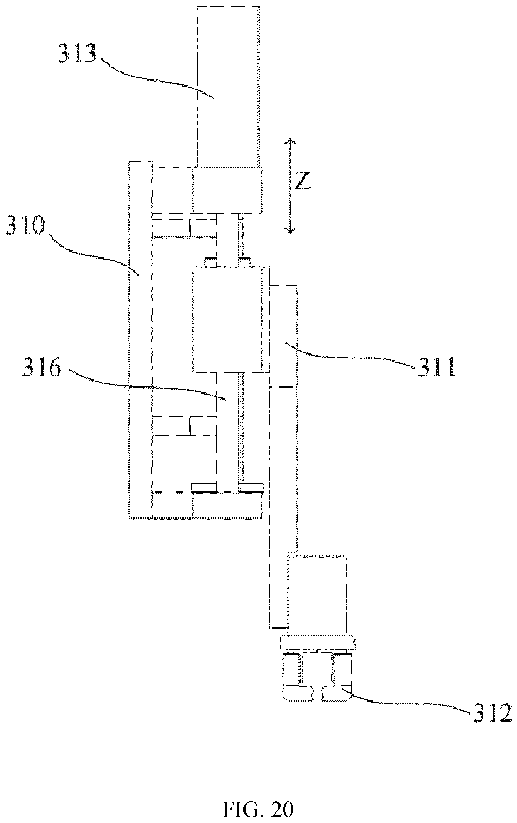

Please refer to FIG. 19 and FIG. 20, in some embodiments, the gripping mechanism 31 further includes a second driving assembly, which comprises a second supporting seat 310, a third moving seat 311, and a third driving member 313. The second supporting seat 310 is fixedly connected to the mounting plate 60, and the third moving seat 311 is movably connected to the second supporting seat 310 in the third direction Z. The gripping assembly 312 is mounted on the third moving seat 311, so that the gripping assembly 312 is moved together with the third moving seat 311 in the third direction Z. The third driving member 313 is provided on the second supporting seat 310 and is connected to the third moving seat 311, such that the third driving member 313 can drive the third moving seat 311 to move relative to the second supporting seat 310 in the third direction Z, and cause the gripping assembly 312 to move to the pickup position or the adjusting position. When the gripping assembly 312 is moved to the adjusting position, the mandrel A on the gripping assembly 312 is located between the first rotation abutting shaft 321 and the second rotation abutting shaft 322, and is coaxial with the first rotation abutting shaft 321 and the second rotation abutting shaft 322, so that when the first rotation abutting shaft 321 and the second rotation abutting shaft 322 clamp the mandrel A and cause it to rotate, the rotation of the first rotation abutting shaft 321, the second rotation abutting shaft 322, and the mandrel A is smooth and stable.

Optionally, the second driving assembly further includes a second lead screw 314 and a second lead screw nut 315. The second lead screw 314 is rotatably connected to the second supporting seat 310 about its own axis, and the axial direction of the second lead screw 314 is parallel to the third direction Z. The third driving member 313 is connected to the second lead screw 314, so that the third driving member 313 can drive the second lead screw 314 to rotate about its own axis. The second lead screw nut 315 is threadedly connected to the second lead screw 314 and is fixedly connected to the third moving seat 311, so that the third moving seat 311 moves together with the second lead screw nut 315. Thus, when the third driving member 313 drives the second lead screw 314 to rotate, the second lead screw nut 315 is moved in the third direction Z (i.e., the axial direction of the second lead screw 314), so as to cause the third moving seat 311 and the gripping assembly 312 to move in the third direction Z between the pickup position and the adjusting position, thus ensuring that when the gripping assembly 312 arrives at the adjusting position, the mandrel A on the gripping assembly 312 is coaxial with the first rotation abutting shaft 321 and the second rotation abutting shaft 322. Optionally, the third driving member 313 may be a motor.

Optionally, two guide rods 316, both extending longitudinally in the third direction Z, are provided on the second supporting seat 310, and the third moving seat 311 is slidably provided on these two guide rods 316. Thus, the two guide rods 316 are used to guide the movement of the third moving seat 311 relative to the second supporting seat 310 in the third direction Z.

In a specific embodiment, the gripping assembly 312 includes a gripper cylinder (not labeled in the figures) and two grippers (not labeled in the figures) mounted at the driving end of the gripper cylinder. The gripper cylinder is used for driving the two grippers to move close to or away from each other, so that the two grippers can grip or release the mandrel. Of course, in other embodiments, the gripping assembly 312 may also employ other gripper structures as long as it can achieve the gripping or releasing of the mandrel, which is not limited herein.

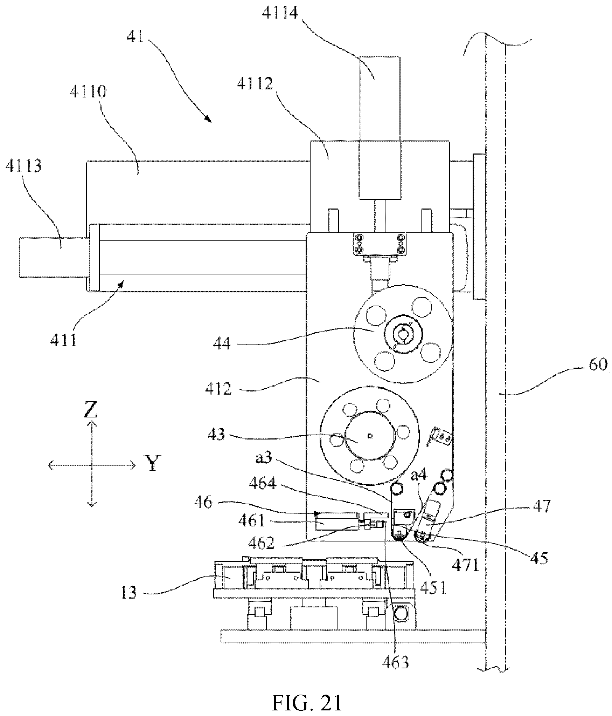

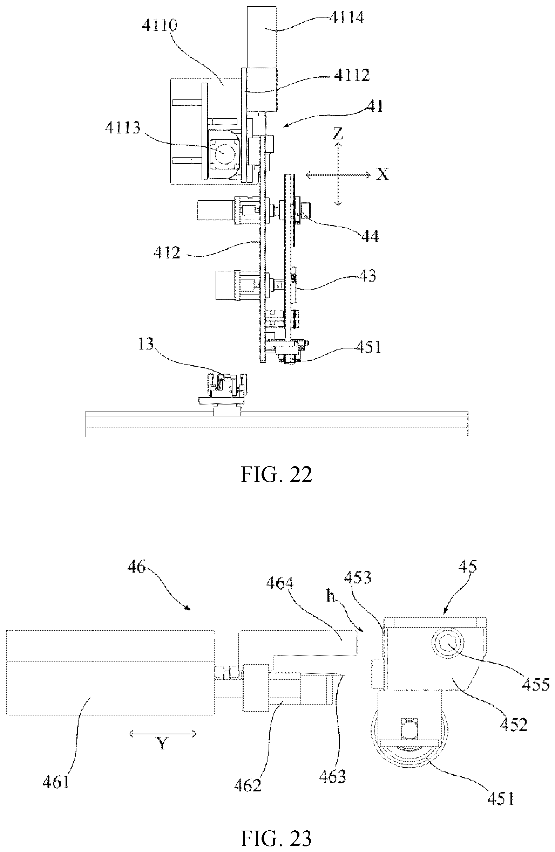

Please refer to FIG. 21 and FIG. 22, in an embodiment of the present disclosure, the adhesive application apparatus 40 includes a movement mechanism 41, an unwinding mechanism 43, a rewinding mechanism 44, an adhesive application mechanism 45, and a trimming mechanism 46. The movement mechanism 41 includes a first driving assembly 411 and a shifting seat 412 that is in transmission connection with the first driving assembly 411. The first driving assembly 411 is used for driving the shifting seat 412 to move in the second direction Y and the third direction Z. The second direction Y intersects with the third direction Z, and preferably, the second direction Y is perpendicular to the third direction Z. The unwinding mechanism 43 is provided on the shifting seat 412 and used for unwinding a double-sided adhesive tape a3 which comprises a double-sided adhesive layer a2 and a separation film a4 laminated together. The rewinding mechanism 44 is provided on the shifting seat 412, and used for rewinding the separation film a4 of the double-sided adhesive tape a3. The adhesive application mechanism 45 is provided on the shifting seat 412 and provided with an adhesive application wheel 451 around which the double-sided adhesive tape a3 winds. The trimming mechanism 46 is provided on the shifting seat 412 and used for cutting through the double-sided adhesive layer a2 of the double-sided adhesive tape a3 from an upstream side of the adhesive application wheel 451, so that the separation film a4 of the double-sided adhesive tape a3 remains continuous and is ultimately rewound by the rewinding mechanism 44.

Here, during movement of the shifting seat 412 in the third direction Z, it may cause the adhesive application wheel 451 to press the double-sided adhesive layer a2 against the mandrel A on the transferring mechanism 13 arrived at the adhesive application station. During movement of the shifting seat 412 in the second direction Y, it may cause the adhesive application wheel 451 to roll along the surface of the mandrel A on the transferring mechanism 13, thereby applying the double-sided adhesive layer a2 onto the mandrel A on the transferring mechanism 13.

In the actual adhesive application operation, when the transferring mechanism 13 bears the mandrel A and moves from the adjusting station B2 to the adhesive application station B3, firstly, the shifting seat 412 is moved towards the mandrel A on the transferring mechanism 13 in the third direction Z until the adhesive application wheel 451 presses the double-sided adhesive tape a3 against the mandrel A. At this point, the double-sided adhesive layer a2 of the double-sided adhesive tape a3 comes into contact with the surface of the mandrel A, while the separation film a4 of the double-sided adhesive tape a3 is located between the double-sided adhesive layer a2 and the adhesive application wheel 451. Then, the shifting seat 412 is moved by a predetermined distance in the second direction Y (that is, the axial direction of the mandrel A) (meanwhile, the rewinding mechanism 44 rewinds the separation film a4, and the unwinding mechanism 43 unwinds the double-sided adhesive tape a3), thereby causing the adhesive application wheel 451 to roll along the surface of the mandrel A, so as to apply the double-sided adhesive layer a2 onto the mandrel A. Then, the trimming mechanism 46 cuts through the double-sided adhesive layer a2 of the double-sided adhesive tape a3 from the upstream side of the adhesive application wheel 451 (without cutting through the separation film a4 of the double-sided adhesive tape a3), and at this point, the cut-off double-sided adhesive layer a2 is applied onto the mandrel A. Then, the shifting seat 412 is moved away from the mandrel A on the transferring mechanism 13 in the third direction Z and returns to its initial position, thereby preparing for the next adhesive application action. In this way, the above adhesive application apparatus 40 can achieve automatic and continuous adhesive application actions, with a high automation degree, stable and reliable adhesive application processes, which is conducive to improving the adhesive application efficiency and the stability of adhesive application quality.

It should be noted that the upstream side of the adhesive application wheel 451 is relative to the conveying of the double-sided adhesive tape a3, that is, the location where the double-sided adhesive tape a3 passes through first is the upstream, and the location passed through later is downstream.

In a specific embodiment, the first driving assembly 411 includes a base 4110, a movement seat 4112, a first movement-driving member 4113, and a second movement-driving member 4114. The base 4110 is fixedly mounted on the mounting plate 60, and the movement seat 4112 is movably connected to the base 4110 in the second direction Y, with the shifting seat 412 being movably connected to the movement seat 4112 in the third direction Z. The first movement-driving member 4113 is provided on the base 4110 and is in driving connection with the movement seat 4112, to drive the movement seat 4112 to move relative to the base 4110 in the second direction Y. The second movement-driving member 4114 is provided on the movement seat 4112 and is in driving connection with the shifting seat 412, to drive the shifting seat 412 to move relative to the movement seat 4112 in the third direction Z. Thus, when it is necessary to cause the adhesive application wheel 451 to move in the third direction Z so as to make the adhesive application wheel 451 abut against or separate from the mandrel A on the transferring mechanism 13, the second movement-driving member 4114 can be used to drive the shifting seat 412 to move relative to the movement seat 4112 in the third direction Z. When it is necessary to cause the adhesive application wheel 451 to move in the second direction Y so as to make the adhesive application wheel 451 roll along the axial direction of the mandrel, the first movement-driving member 4113 can be used to drive the movement seat 4112 to move in the second direction Y, so as to cause the adhesive application wheel 451 to roll along the axial direction of the mandrel, such that the adhesive application wheel 451 applies the double-sided adhesive layer a2 onto the mandrel A.

Optionally, the first movement-driving member 4113 and the second movement-driving member 4114 may be a lead screw pair driving structure. Of course, in other embodiments, they may also be other linear driving structures, which is not limited herein.

Optionally, a fourth sliding rail extending longitudinally in the second direction Y is provided on the base 4110, and a fourth slider that slidably cooperates with the fourth sliding rail is provided on the movement seat 4112. Thus, the movement of the fourth slider along the fourth sliding rail is utilized to guide the movement of the movement seat 4112 relative to the base 4110 in the second direction Y.

Optionally, a fifth sliding rail extending longitudinally in the third direction Z is provided on the movement seat 4112, and a fifth slider that slidably cooperates with the fifth sliding rail is provided on the shifting seat 412. Thus, the movement of the fifth slider along the fifth sliding rail is utilized to guide the movement of the shifting seat 412 relative to the movement seat 4112 in the third direction Z.

It should be noted that in some other embodiments, the movement seat 4112 may be movable relative to the base 4110 in the third direction Z, and the shifting seat 412 may be movable relative to the movement seat 4112 in the second direction Y, as long as it can achieve the movement of the adhesive application wheel 451 in the second direction Y and the third direction Z, which is not limited herein.

In a specific embodiment, the adhesive application apparatus 40 further includes an abutting mechanism 47 provided on the shifting seat 412, and the abutting mechanism 47 is provided with an abutting wheel 471 located downstream of the adhesive application wheel 451. When the adhesive application wheel 451 presses the double-sided adhesive layer a2 against the mandrel A on the transferring mechanism 13 arrived at the adhesive application station B3, the abutting wheel 471 also abuts against the mandrel A on the transferring mechanism 13 arrived at the adhesive application station B3, such that the abutting wheel 471, when moving in the second direction Y along with the shifting seat 412, smooth out the double-sided adhesive layer a2 applied on the mandrel A. Thus, as the adhesive application wheel 451 rolls along the axial direction of the mandrel A (i.e., the second direction Y), it applies the double-sided adhesive layer a2 of the double-sided adhesive tape a3 onto the mandrel A. Meanwhile, the abutting wheel 471 also rolls along the axial direction of the mandrel A so as to further press the double-sided adhesive layer a2 applied on the mandrel A against the mandrel A (i.e., to smooth out), such that the double-sided adhesive layer a2 is more tightly applied to the mandrel A.

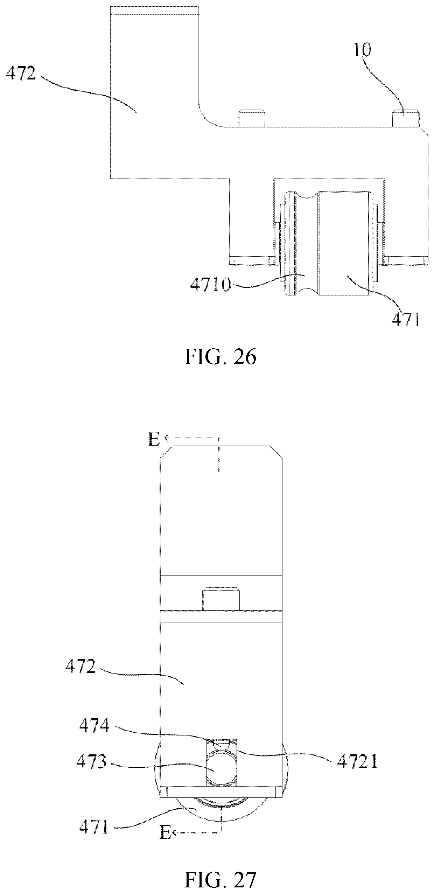

Please refer to FIG. 26 to FIG. 28, further, the peripheral surface of the abutting wheel 471 is recessed inward to form a recessed surface 4710, which is designed to match with the peripheral surface of the mandrel A, thereby increasing the abutting area between the abutting wheel 471 and the mandrel A, and enhancing the effect of pressing the double-sided adhesive layer a2 against the mandrel A. Optionally, the outer surface of the mandrel A is a curved surface, so the recessed surface 4710 on the abutting wheel 471 is also a curved surface, allowing the recessed surface 4710 to conform to the outer surface of the mandrel A.

In a specific embodiment, the abutting mechanism 47 comprises a connecting seat 472, a supporting shaft 473 and a second elastic member 474. The connecting seat 472 is provided on the shifting seat 412. The supporting shaft 473 is movably connected to the connecting seat 472, and the abutting wheel 471 is rotatably connected to the supporting shaft 473. The second elastic member 474 abuts between the supporting shaft 473 and the connecting seat 472 so as to provide a pre-tightening force that causes the supporting shaft 473 to give the abutting wheel 471 a tendency to move close to the mandrel A. Optionally, the second elastic member 474 may be a spring.

Thus, in the process of the shifting seat 412 causing the adhesive application wheel 451 and the abutting wheel 471 to move close to the mandrel A in the third direction Z, the abutting wheel 471 firstly abuts against the mandrel A. As the shifting seat 412 continues to cause the adhesive application wheel 451 to move towards the mandrel A, the second elastic member 474 is compressed, until the adhesive application wheel 451 presses the double-sided adhesive layer a2 of the double-sided adhesive tape a3 against the mandrel A (i.e., at this point, both the adhesive application wheel 451 and the abutting wheel 471 are pressed against the mandrel A). After the adhesive application wheel 451 and the abutting wheel 471 are both pressed against the mandrel A, the movement seat 4112 causes the adhesive application wheel 451 and the abutting wheel 471 to roll together along the axial direction of the mandrel A, such that the adhesive application wheel 451 applies the double-sided adhesive layer a2 of the double-sided adhesive tape a3 onto the mandrel A, while the abutting wheel 471 further presses the double-sided adhesive layer a2 applied on the mandrel A against the mandrel A. After the movement seat 4112 has moved by a preset distance in the second direction Y and stops, the trimming mechanism 46 cuts through the double-sided adhesive layer a2 of the double-sided adhesive tape a3 from the upstream side of the adhesive application wheel 451. Then, the movement seat 4112 causes the adhesive application wheel 451 and the abutting wheel 471 to continue rolling along the mandrel A by a certain distance, such that the tail end of the cut-off double-sided adhesive layer a2 is also pressed against the mandrel A by the adhesive application wheel 451. Then, the shifting seat 412 causes the adhesive application wheel 451 to move away from the mandrel A in the third direction Z by a certain distance, so as to separate the adhesive application wheel 451 from the mandrel A, and under the elastic force provided by the second elastic member 474, the abutting wheel 471 remains in contact with the mandrel A. Then, the movement seat 4112 causes the abutting wheel 471 to roll along the axial direction of the mandrel A by a certain distance, such that the tail end of the cut-off double-sided adhesive layer a2 is also pressed against the mandrel A by the abutting wheel 471. Finally, the movement seat 4112 and the shifting seat 412 return to their initial positions in the second direction Y and the third direction Z, respectively, preparing for the next adhesive application operation.

Optionally, the connecting seat 472 is opened with a mounting groove 4721, and the supporting shaft 473 is provided in this mounting groove 4721, allowing the supporting shaft 473 to move by a certain distance along the mounting groove 4721 (i.e., in the third direction Z). One end of the second elastic member 474 abuts against the connecting seat 472, and the other end abuts against the supporting shaft 473, thereby enabling the abutting wheel 471, when subjected to external pressure, to overcome the spring force of the second elastic member 474 and move relative to the connecting seat 472 in the third direction Z. Optionally, the second elastic member 474 may be a spring pin.

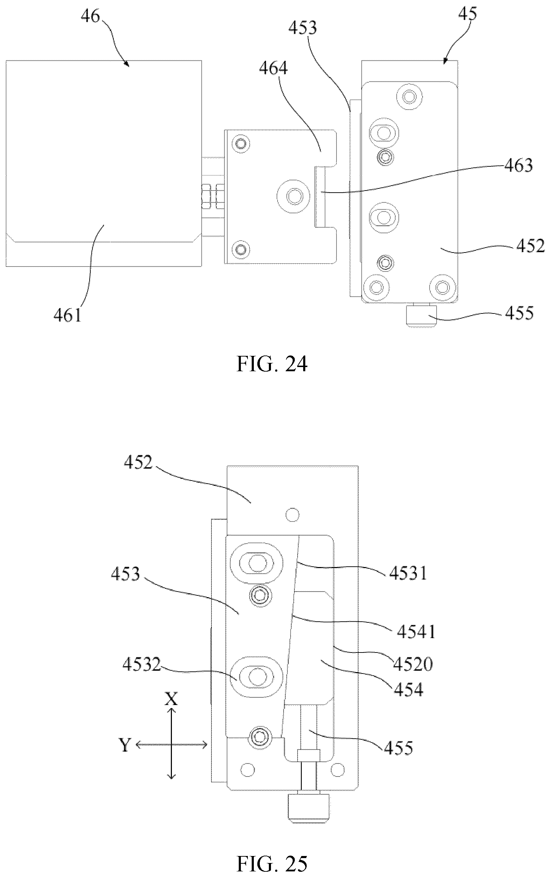

Please refer to FIG. 23 to FIG. 25, in some embodiments, the adhesive application mechanism 45 further includes a first restraining block 453, and the trimming mechanism 46 includes a cutter seat 462 as well as a cutter 463 and a second restraining block 464 provided on the cutter seat 462. The cutter seat 462 is provided on the shifting seat 412, causing the cutter seat 462 to move together with the shifting seat 412. The first restraining block 453 and the second restraining block 464 are arranged opposite to each other in the second direction Y, and a tape-through passage h is formed between the first restraining block 453 and the second restraining block 464 for the double-sided adhesive tape a3 to pass through. This tape-through passage h is located on the upstream side of the adhesive application wheel 451, which means that the double-sided adhesive tape a3 unwound by the unwinding mechanism 43 passes through the tape-through passage h and then goes around the adhesive application wheel 451, and the adhesive application wheel 451 applies the double-sided adhesive layer a2 of the double-sided adhesive tape a3 onto the mandrel A, while the separation film a4 of the double-sided adhesive tape a3 is rewound onto the rewinding mechanism 44.

The cutter seat 462 is capable of moving towards the adhesive application mechanism 45 in the second direction Y to arrive at a trimming position. When the cutter seat 462 moves to the trimming position, the second restraining block 464 abuts against the first restraining block 453, and the cutter 463 cuts through the double-sided adhesive layer a2 between the first restraining block 453 and the adhesive application wheel 451. In this way, the first restraining block 453 and the second restraining block 464 are used to limit the cutting depth of the cutter 463, ensuring that the cutter 463 only cuts through the double-sided adhesive layer a2 of the double-sided adhesive tape a3 during each trimming, without cutting through the separation film a4 of the double-sided adhesive tape a3.

In a specific embodiment, the trimming mechanism 46 further includes a trimming-driving member 461, which is mounted on the shifting seat 412, and the cutter seat 462 is mounted on the driving end of the trimming-driving member 461. The trimming-driving member 461 is used for driving the cutter seat 462 to move towards the adhesive application mechanism 45, causing the cutter 463 to cut through the double-sided adhesive layer a2 of the double-sided adhesive tape a3 from the upstream side of the adhesive application wheel 451. Optionally, the trimming-driving member 461 may be an air cylinder.

In a specific embodiment, the adhesive application mechanism 45 includes an adhesive application seat 452 provided on the shifting seat 412. The adhesive application wheel 451 is rotatably connected to the adhesive application seat 452. The first restraining block 453 is provided on the adhesive application seat 452, and its position relative to the adhesive application seat 452 is adjustable in the second direction Y, making it adaptable to different specifications of the double-sided adhesive tape a3 and the mandrel A and thus enhancing the compatibility of the equipment.

Further, the first restraining block 453 is movably connected to the adhesive application seat 452 in the second direction Y. The first restraining block 453 has a first inclined surface 4531, which is inclined relative to a plane perpendicular to the second direction Y. The adhesive application mechanism 45 further includes an adjusting wedge 454 provided on the adhesive application seat 452, and the adjusting wedge 454 has a second inclined surface 4541 parallel to and in contact with the first inclined surface 4531.

The adjusting wedge 454 is movable relative to the adhesive application seat 452 along a preset direction perpendicular to the second direction Y, so as to push the first restraining block 453 to move in the second direction Y under the guidance of the first inclined surface 4531 and the second inclined surface 4541, thereby achieving the adjustment of the position of the first restraining block 453 relative to the adhesive application seat 452 in the second direction Y. Thus, when it is necessary to adjust the position of the first restraining block 453, the adjusting wedge 454 is controlled to move along the preset direction, so as to cause the first restraining block 453 to move relative to the adhesive application seat 452 in the second direction Y, i.e., achieving the adjustment of the position of the first restraining block 453. Optionally, the preset direction is parallel to the first direction X.

Further, the adhesive application seat 452 has a blocking surface 4520, which is located on the side of the first restraining block 453 away from the second restraining block 464. The adjusting wedge 454 is located between the first restraining block 453 and the blocking surface 4520. That is, the second restraining block 464, the first restraining block 453, the adjusting wedge 454, and the blocking surface 4520 are sequentially arranged in the second direction Y. The first restraining block 453 and the adjusting wedge 454 are abutted against each other through the first inclined surface 4531 and the second inclined surface 4541, and the adjusting wedge 454 and the blocking surface 4520 are abutted against each other.

The blocking surface 4520 is parallel to a plane perpendicular to the second direction Y, so that when the adjusting wedge 454 is moved along the preset direction and pushes the first restraining block 453 to move in the second direction Y, the blocking surface 4520 limits the position of the adjusting wedge 454 in the second direction Y, thereby preventing the adjusting wedge 454 from displacing in the second direction Y.

Further, the adhesive application mechanism 45 further includes an adjusting screw 455, which is rotatably connected to the adhesive application seat 452 about its own axis. The axial direction of the adjusting screw 455 is parallel to the above preset direction, and one end of the adjusting screw 455 is threadedly connected to the adjusting wedge 454, such that by screwing the adjusting screw 455, it is possible to cause the adjusting wedge 454 to move along the preset direction, thereby pushing the first restraining block 453 to move in the second direction Y.

Further, the first restraining block 453 is opened with a third waist-type hole 4532 extending longitudinally in the second direction Y. The adhesive application mechanism 45 further includes a threaded fastener (not shown in the figures), which penetrates the third waist-type hole 4532 and is threadedly connected to the adhesive application seat 452, so as to lock and fix the first restraining block 453 onto the adhesive application seat 452. Thus, when it is necessary to adjust the position of the first restraining block 453, the threaded fastener is first loosened, allowing the first restraining block 453 to move relative to the adhesive application seat 452 in the second direction Y. Then, the adjusting screw 455 is screwed, causing the adjusting wedge 454 to move relative to the adhesive application seat 452 along the preset direction, and thus causing the first restraining block 453 to move relative to the adhesive application seat 452 in the second direction Y. Once the position of the first restraining block 453 is adjusted in position, the rotation of the adjusting screw 455 is stopped, and the threaded fastener is screwed to lock and fix the first restraining block 453 onto the adhesive application seat 452. Optionally, the threaded fastener may be a fastening screw.

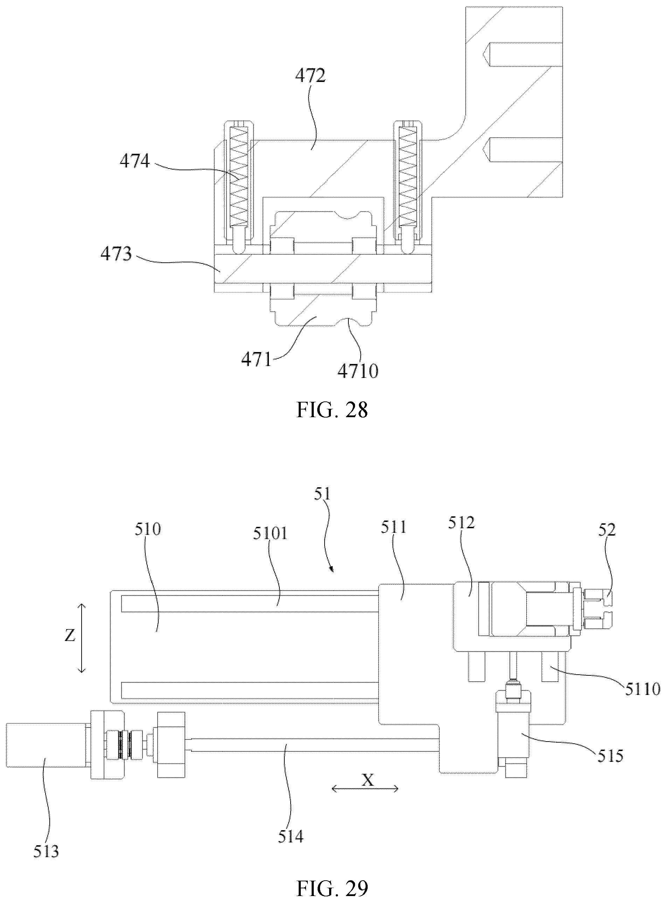

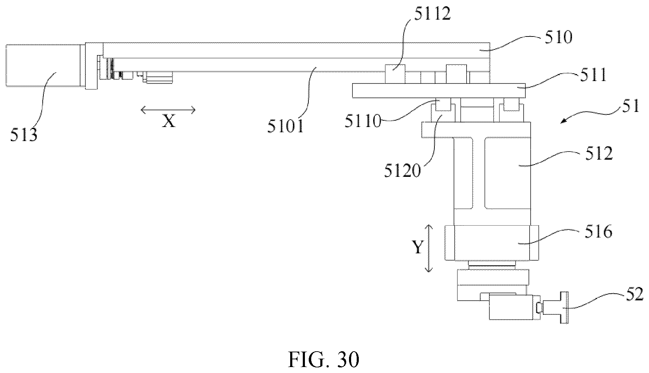

Please refer to FIG. 29 and FIG. 30, in an embodiment of the present disclosure, the feeding apparatus 50 includes a feeding-driving mechanism 51 and a holding mechanism 52. The feeding-driving mechanism 51 is connected to the holding mechanism 52, such that the feeding-driving mechanism 51 may drive the holding mechanism 52 to move in the first direction X between the feeding station and the winding mechanism D. When the holding mechanism 52 is located at the feeding station, it may grip the mandrel A on the transferring mechanism 13 arrived at the feeding station. When the holding mechanism 52 is located at the winding mechanism D, it may place the gripped mandrel A onto the winding mechanism D. Thus, when the transferring mechanism 13 carries the adjusted mandrel A to the feeding station, firstly, the feeding-driving mechanism 51 drives the holding mechanism 52 to move in the first direction X to the feeding station, and the holding mechanism 52 grips the mandrel A on the transferring mechanism 13 at the feeding station. Then, the feeding-driving mechanism 51 drives the holding mechanism 52 to move in the first direction X to the winding mechanism D, and at this point, the winding needle of the winding mechanism D protrudes out and is inserted into the mandrel A, such that the positioning portion a1 of the mandrel A is matched with the winding needle. Then, the holding mechanism 52 releases the mandrel A and returns to the feeding station.

In a specific embodiment, the feeding-driving mechanism 51 is also used to drive the holding mechanism 52 to move in the third direction Z, so that at the feeding station, the holding mechanism 52 may be moved close to or away from the mandrel A on the transferring mechanism 13, thereby gripping the mandrel A on the transferring mechanism 13. Thus, when it is necessary to grip the mandrel A on the transferring mechanism 13 arrived at the feeding station, the feeding-driving mechanism 51 drives the holding mechanism 52 to move close to the mandrel A on the transferring mechanism 13 in the third direction Z until the holding mechanism 52 can hold the mandrel A. Then, the holding mechanism 52 holds the mandrel A, and the holding structure 136 of the transferring mechanism 13 releases the mandrel A. Then, the feeding-driving mechanism 51 drives the holding mechanism 52 to move away from the transferring mechanism 13 in the third direction Z and returns, such that the holding mechanism 52 causes the mandrel A to separate from the transferring mechanism 13, i.e., completing the gripping of the mandrel A.

In a specific embodiment, the feeding-driving mechanism 51 is also used to drive the holding mechanism 52 to rotate around a rotation axis, so as to cause the mandrel A gripped by the holding mechanism 52 at the winding mechanism D to be aligned with the winding needle of the winding mechanism D, thereby enabling the winding needle to accurately insert into the mandrel A. Thus, when the feeding-driving mechanism 51 drives the holding mechanism 52 to move in the first direction X to the winding mechanism D, firstly, the feeding-driving mechanism 51 drives the holding mechanism 52 to rotate around the rotation axis until the mandrel A on the holding mechanism 52 aligns with the winding needle of the winding mechanism D. At this point, the winding needle of the winding mechanism D protrudes out and is inserted into the mandrel A, until the positioning portion a1 of the mandrel A is matched with the winding needle. Then, the holding mechanism 52 releases the mandrel A, and under the drive of the feeding-driving mechanism 51, returns to the feeding station, thereby preparing for the next feeding action. Optionally, the rotation axis is parallel to the second direction Y.

Further, the feeding-driving mechanism 51 includes a third supporting seat 510, a fourth moving seat 511, a fourth driving member 513, a fifth moving seat 512, a fifth driving member 515, and a second rotation driving member 516. The third supporting seat 510 is fixedly connected to the mounting plate 60. The fourth moving seat 511 is movably connected to the third supporting seat 510 in the first direction X. The fourth driving member 513 is mounted on the third supporting seat 510 and connected to the fourth moving seat 511, enabling the fourth driving member 513 to drive the fourth moving seat 511 to move relative to the third supporting seat 510 in the first direction X. The fifth moving seat 512 is movably connected to the fourth moving seat 511 in the third direction Z. The fifth driving member 515 is mounted on the fourth moving seat 511 and connected to the fifth moving seat 512, enabling the fifth driving member 515 to drive the fifth moving seat 512 to move relative to the fourth moving seat 511 in the third direction Z. The second rotation driving member 516 is mounted on the fifth moving seat 512, and the holding mechanism 52 is mounted on the driving end of the second rotation driving member 516, so as to be driven to rotate around the above rotation axis by the second rotation driving member 516. Optionally, the fifth driving member 515 may be an air cylinder. The second rotation driving member 516 may be a rotary cylinder.

Optionally, the feeding-driving mechanism 51 further includes a third lead screw 514 and a third lead screw nut (not shown in the figures). The third lead screw 514 is rotatably connected to the third supporting seat 510 about its own axis, and the axial direction of the third lead screw 514 is parallel to the first direction X. The fourth driving member 513 is connected to the third lead screw 514, enabling the fourth driving member 513 to drive the third lead screw 514 to rotate about its own axis. The third lead screw nut is threadedly connected to the third lead screw 514 and fixedly connected to the fourth moving seat 511. Thus, when the fourth driving member 513 drives the third lead screw 514 to rotate, the third lead screw nut is moved along the axial direction of the third lead screw 514 (i.e., the first direction X), thereby causing the fourth moving seat 511 to move in the first direction X. Optionally, the fourth driving member 513 may be a motor.

Optionally, the third supporting seat 510 is provided with a sixth sliding rail 5101 extending longitudinally in the first direction X, and the fourth moving seat 511 is provided with a sixth slider 5112 that slidably cooperates with the sixth sliding rail 5101. Thus, the movement of the sixth slider 5112 along the sixth sliding rail 5101 is utilized to guide the movement of the fourth moving seat 511 in the first direction X relative to the third supporting seat 510.

Optionally, the fourth moving seat 511 is provided with a seventh sliding rail 5110 extending longitudinally in the third direction Z, and the fifth moving seat 512 is provided with a seventh slider 5120 that slidably cooperates with the seventh sliding rail 5110. Thus, the movement of the seventh slider 5120 along the seventh sliding rail 5110 is utilized to guide the movement of the fifth moving seat 512 in the third direction Z relative to the fourth moving seat 511.

Based on the above mandrel feeding device, the present disclosure also provides a battery winder. The battery winder includes a winding mechanism D and the mandrel feeding device as described in any of the above embodiments. The feeding apparatus 50 of the mandrel feeding device is used to transfer the mandrel A arrived at the feeding station to the winding mechanism D. The winding needle of the winding mechanism D protrudes out, such that the winding needle is inserted into the central hole of the mandrel A, and the positioning portion a1 of the mandrel A cooperates with the winding needle, thereby enabling the winding needle to cause the mandrel A to rotate. Thus, when it is necessary to perform winding operations, the end of the winding material strip is adhered and fixed to the mandrel A through the double-sided adhesive layer a2, and the winding needle causes the mandrel A to rotate, thereby winding the winding material strip around the mandrel A to form a cell. Optionally, the winding material strip may be a diaphragm.

The technical features of the above embodiments can be combined arbitrarily. For the sake of brevity, not all possible combinations of the individual technical features of the above embodiments are described. However, a combination of these technical features shall be considered to be within the scope of the present specification, as long as there is no contradiction in the combination.

The above embodiments are merely expressions of a few implementations of the present disclosure described in a specific and detailed manner, and are not to be construed as limitation to the scope of the present disclosure. It is to be noted that for a person of ordinary skill in the art, various modifications and improvements could be made without departing from the principle of the present disclosure, and shall fall into the protection scope of the present disclosure. Therefore, the protection scope of the present disclosure shall be subject to the appended claims.

## Claims

1. A mandrel feeding device, **characterized in that** the mandrel feeding device has a dispensing station (B1), an adjusting station (B2) and an adhesive application station (B3), and comprises:
a transferring apparatus (10) capable of moving to the dispensing station (B1), the adjusting station (B2), and the adhesive application station (B3);
a dispensing apparatus (20) provided at the dispensing station (B1) and configured for storing mandrels and sequentially outputting mandrels one by one, wherein the transferring apparatus (10), when moved to the dispensing station (B1), is capable of receiving the mandrels output by the dispensing apparatus (20);
an adjusting apparatus (30) provided at the adjusting station (B2) and configured for causing a mandrel, which is transferred to the adjusting station (B2) by the transferring apparatus (10), to rotate;
an adhesive application apparatus (40) provided at the adhesive application station and configured for applying a double-sided adhesive layer onto a mandrel transferred to the adhesive application station (B3) by the transferring apparatus (10); and
a feeding apparatus (50) configured for gripping a mandrel on the transferring apparatus (10) and transferring gripped mandrel to a winding mechanism (D).

2. The mandrel feeding device according to claim 1, **characterized in that** the transferring apparatus (10) comprises a transferring mechanism (13), which comprises:
a mounting seat (130) and a supporting board (132), the supporting board (132) being mounted on the mounting seat (130) and configured for bearing a mandrel; and
a holding structure (136) comprising two holding blocks (131), which are provided on the mounting seat (130), are located on two sides of the supporting board (132) in a first direction, and are capable of moving close to or away from each other in a controlled way so as to hold or release the mandrels borne on the supporting board (132).

3. The mandrel feeding device according to claim 2, **characterized in that** the holding structure (136) further comprises:
a first elastic member (134) provided on the mounting seat (130), each of the two holding blocks (131) being correspondingly provided with the first elastic member (134), and the first elastic members (134) each abutting against corresponding holding block (131) so as to provide a pre-tightening force that gives the two holding blocks (131) a tendency to move close to each other; and
a wedge block (138) provided on the mounting seat (130) and located between the two holding blocks (131), each of the two holding blocks (131) being provided with an abutting portion (1314) that abuts against the wedge block (138), and the wedge block (138) being capable of moving in a controlled way between two abutting portions (1314) so as to drive the two holding blocks (131) to move close to or away from each other.

4. The mandrel feeding device according to any one of claims 1 to 3, **characterized in that** the transferring apparatus (10) comprises two transferring mechanisms (13), one of which is capable of moving between the dispensing station (B1) and the adjusting station (B2), so as to receive the mandrels output by the dispensing apparatus (20) at the dispensing station (B1), and to transfer the mandrels to the adjusting apparatus (30) at the adjusting station (B2);
wherein the other one of the transferring mechanisms (13) is capable of moving between the adjusting station (B2) and the adhesive application station (B3), so as to receive the mandrels transferred by the adjusting apparatus (30) at the adjusting station (B2), to enable the adhesive application apparatus (40) to apply adhesive to the mandrels at the adhesive application station (B3), and to transfer the mandrels to the feeding apparatus (50).

5. The mandrel feeding device according to any one of claims 1 to 4, **characterized in that** the dispensing apparatus (20) comprises:
a material box (21) provided with a containment cavity (210) for containing a plurality of mandrels, and an opening (212) at a bottom of the containment cavity (210); and
a dispensing wheel (22) rotatably provided below the material box (21), the dispensing wheel (22) being opened with a plurality of accommodation grooves (221) on a peripheral surface thereof, and the plurality of accommodation grooves (221) being arranged at intervals in a circumferential direction of the dispensing wheel (22),
wherein, each of the accommodation grooves (221) is configured for accommodating a mandrel when rotating to the opening (212) along with the dispensing wheel (22), and transferring the mandrel onto the transferring apparatus (10) when rotating to an outlet position along with the dispensing wheel (22).

6. The mandrel feeding device according to claim 5, **characterized in that** the dispensing apparatus (20) further comprises:
a guiding member (23) arranged around the dispensing wheel (22) and forming a conveying channel with the peripheral surface of the dispensing wheel (22), the guiding member (23) being provided with an inlet end (2210) at the opening (212) and an outlet end (2212) at the outlet position,
during rotating of the dispensing wheel (22), the mandrels accommodated in the accommodation grooves (221) enter the conveying channel from the inlet end (2210) and are conveyed to the transferring apparatus (10) through the outlet end (2212).

7. The mandrel feeding device according to claim 6, **characterized in that** the dispensing apparatus (20) further comprises:
a guiding matching member (24) provided at the outlet position and forming a dispensing port (C) with the outlet end (2212) of the guiding member (23), the mandrels accommodated in the accommodation grooves (221), when rotating to the dispensing port (C) along with the dispensing wheel (22), falling onto the transferring apparatus (10) from the dispensing port (C) under their own gravity.

8. The mandrel feeding device according to any one of claims 1 to 7, **characterized in that** the adjusting apparatus (30) comprises an adjusting mechanism (32), which comprises:
a first supporting seat (320), a first rotation abutting shaft (321) and a second rotation abutting shaft (322), the first rotation abutting shaft (321) and the second rotation abutting shaft (322) being rotatably connected to the first supporting seat (320) about their own axes respectively, and the axes of the first rotation abutting shaft (321) and the second rotation abutting shaft (322) being collinear; the first rotation abutting shaft (321) and the second rotation abutting shaft (322) being arranged at intervals and being capable of moving close to or away from each other in a controlled way; the mandrels transferred to the adjusting station (B2) by the transferring apparatus (10) being capable of moving to between the first rotation abutting shaft (321) and the second rotation abutting shaft (322) in a controlled way; and
a detector (324) configured for detecting a position of a positioning portion on a mandrel clamped between the first rotation abutting shaft (321) and the second rotation abutting shaft (322).

9. The mandrel feeding device according to claim 8, **characterized in that** the adjusting mechanism (32) further comprises a guiding shaft (323), which is connected to an end of the first rotation abutting shaft (321) facing towards the second rotation abutting shaft (322), or connected to an end of the second rotation abutting shaft (322) facing towards the first rotation abutting shaft (321);
as the first rotation abutting shaft (321) and the second rotation abutting shaft (322) move close to or away from each other, the guiding shaft (323) is inserted into or withdrawn from the mandrel between the first rotation abutting shaft (321) and the second rotation abutting shaft (322).

10. The mandrel feeding device according to claim 8 or 9, **characterized in that** the adjusting mechanism (32) further comprises:
a second moving seat (328) movably connected to the first supporting seat (320), the second rotation abutting shaft (322) being rotatably connected to the second moving seat (328) about its axis;
a second driving member (329) mounted on the first supporting seat (320), and connected to the second moving seat (328) such that the second driving member (329) is capable of driving the second moving seat (328) to cause the second rotation abutting shaft (322) to move close to or away from the first rotation abutting shaft (321).

11. The mandrel feeding device according to any one of claims 8 to 10, **characterized in that** the adjusting mechanism (32) further comprises:
an adjusting seat provided on the first supporting seat (320), the detector (324) being mounted on the adjusting seat, and a position of the adjusting seat relative to the first supporting seat (320) being adjustable.

12. The mandrel feeding device according to any one of claims 8 to 11, **characterized in that** the adjusting apparatus (30) further comprises a gripping mechanism (31) which comprises a gripping assembly (312) capable of moving to a pickup position and an adjusting position;
when the gripping assembly (312) is moved to the pickup position, it is capable of gripping or releasing a mandrel; when the gripping assembly (312) is moved to the adjusting position, the mandrel gripped by the gripping assembly (312) is located between the first rotation abutting shaft (321) and the second rotation abutting shaft (322), and the first rotation abutting shaft (321) and the second rotation abutting shaft (322) are capable of clamping the mandrel.

13. The mandrel feeding device according to any one of claims 1 to 12, **characterized in that** the adhesive application apparatus (40) comprises:
a movement mechanism (41) comprising a first driving assembly (411) and a shifting seat (412) being in transmission connection with the first driving assembly (411), the first driving assembly (411) being configured for driving the shifting seat (412) to move in a second direction and a third direction which are intersected with each other;
an unwinding mechanism (43) provided on the shifting seat (412) and configured for unwinding a double-sided adhesive tape which comprises a double-sided adhesive layer and a separation film laminated together;
a rewinding mechanism (44) provided on the shifting seat (412), the unwinding mechanism (43) being configured for rewinding the separation film;
an adhesive application mechanism (45) provided on the shifting seat (412) and provided with an adhesive application wheel (451) around which the double-sided adhesive tape winds;
a trimming mechanism (46) provided on the shifting seat (412) and configured for cutting through the double-sided adhesive layer from an upstream side of the adhesive application wheel (451);
wherein as the shifting seat (412) moves in the third direction, it is capable of causing the adhesive application wheel (451) to press the double-sided adhesive layer against the mandrel arrived at the transferring apparatus (10); as the shifting seat (412) moves in the second direction, it is capable of causing the adhesive application wheel (451) to roll along a surface of the mandrel on the transferring apparatus (10).

14. The mandrel feeding device according to claim 13, **characterized in that** the adhesive application apparatus (40) further comprises:
an abutting mechanism (47) provided on the shifting seat (412) and provided with an abutting wheel (471) downstream of the adhesive application wheel (451);
when the adhesive application wheel (451) presses the double-sided adhesive layer against the mandrel on the transferring apparatus (10) arrived at the adhesive application station (B3), the abutting wheel (471) abuts against the mandrel on the transferring apparatus (10) arrived at the adhesive application station (B3), so as to smooth the double-sided adhesive layer applied on the mandrel during movement of the abutting wheel (471) in the second direction along with the shifting seat (412).

15. The mandrel feeding device according to claim 14, **characterized in that** the adhesive application mechanism (45) is further provided with a first restraining block (453), and the trimming mechanism (46) comprises:
a cutter seat (462) provided on the shifting seat (412) and capable of moving towards the adhesive application mechanism (45) in the second direction to a trimming position;
a cutter (463) and a second restraining block (464), the cutter (463) and the second restraining block (464) being both provided on the cutter seat (462), the first restraining block (453) and the second restraining block (464) being arranged opposite to each other in the second direction, the first restraining block (453) and the second restraining block (464) forming a tape-through passage (h) therebetween for the double-sided adhesive tape to pass through, and the tape-through passage (h) being located upstream of the adhesive application wheel (451);
when the cutter seat (462) moves to the trimming position, the second restraining block (464) abuts against the first restraining block (453), and the cutter (463) cuts through the double-sided adhesive layer between the first restraining block (453) and the adhesive application wheel (451).

16. The mandrel feeding device according to claim 15, the adhesive application mechanism (45) further comprises:
an adhesive application seat (452) provided on the shifting seat (412), the adhesive application wheel (451) being rotatably connected to the adhesive application seat (452), the first restraining block (453) being provided on the adhesive application seat (452), and the first restraining block (453) being adjustable in position relative to the adhesive application seat (452) in the second direction.

17. The mandrel feeding device according to claim 16, **characterized in that** the first restraining block (453) is movably connected to the adhesive application seat (452) in the second direction, the first restraining block (453) has a first inclined surface (4531), and the adhesive application mechanism (45) further comprises:
an adjusting wedge (454) provided on the adhesive application seat (452), the adjusting wedge (454) being provided with a second inclined surface (4541) which is parallel to and in contact with the first inclined surface (4531), and the adjusting wedge (454) being movable relative to the adhesive application seat (452) in a preset direction perpendicular to the second direction, so as to push the first restraining block (453) to move in the second direction under the guidance of the first inclined surface (4531) and the second inclined surface (4541).

18. The mandrel feeding device according to claim 17, **characterized in that** the adhesive application seat (452) has a blocking surface (4520), which is parallel to a plane perpendicular to the second direction and is located on a side of the first restraining block (453) away from the second restraining block (464), and the adjusting wedge (454) is located between the first restraining block (453) and the blocking surface (4520).

19. The mandrel feeding device according to any one of claims 14 to 18, **characterized in that** the abutting mechanism (47) comprises:
a connecting seat (472) provided on the shifting seat (412);
a supporting shaft (473) movably connected to the connecting seat (472), the abutting wheel (471) being rotatably connected to the supporting shaft (473);
a second elastic member (474) abutting between the supporting shaft (473) and the connecting seat (472) so as to provide a pre-tightening force that causes the supporting shaft (473) to give the abutting wheel (471) a tendency to move close to the mandrel.

20. A battery winder, **characterized by** comprising the mandrel feeding device according to any one of claims 1 to 19.
